# EUROPEAN PATENT APPLICATION

(11) **EP 1 885 144 A2**
(43) Date of publication of application: **06.02.2008**
(21) Application number: 06124457.0
(22) Date of filing: 21.11.2006
(51) Int. Cl.: H04Q 7/38

(54) **Handover between a cellular network and a wireless LAN**

(30) Priority: 31.07.2006 JP 2006208998
(71) Applicant: Fujitsu Ltd., Kawasaki-shi, Kanagawa 211-8588 (JP)
(72) Inventor: Sano, Shoichi c/o Fujitsu Ltd.,, Kawasaki-shi, Kanagawa 211-8588 (JP)
(74) Representative: Wilding, Frances Ward

(57) **Abstract**

A communication apparatus (4) has a plurality of interfaces serving a plurality of networks. The communication apparatus selects an interface according to electric wave reception intensity to reduce power consumption and contribute to the maintenance of reliability in communication. The communication apparatus (communication terminal apparatus, the other party's communication terminal apparatus) is used for communication in such a way that the communication apparatuses are connected to the plurality of networks wirelessly to carry out communication through each network. The communication apparatus has the plurality of interfaces (cellular interface CI, WLAN interface WI) responding to the networks. The communication apparatus also has controlling unit (power supply controlling unit) that connects any one of the interfaces to the power supply to actuate the connected interface, and that connects an interface on rest to the power supply in response to a communication state of an interface on communication to change communication connection from the interface on communication to the other interface on rest. The communication apparatus changes the interfaces while maintaining communication with the other party's communication apparatus.

## Description

### CROSS-REFERENCE TO RELATED APPLICATIONS

This application is based upon and claims the benefit of priority from the prior Japanese Patent Application No. 2006-208998, filed on July 31, 2006, the entire contents of which are incorporated herein by reference.

### BACKGROUND OF THE INVENTION

### 1. Field of the Invention

The present invention relates generally to communication control including a plurality of interfaces such as an interface serving a WLAN (Wireless Local Area Network) and an interface serving a cellular network and provided in response to a communication state such as electric wave reception intensity, and more particularly, to a communication apparatus, a server, a relay apparatus, a communication system, a communication method, a communication program, and a recording medium that selects an interface to execute detoured incoming call reception.

### 2. Description of the Related Art

Communication using mobile equipment including a cellular phone is carried out through a standard cellular communication system network, WLAN, etc. The cellular network system includes CDMA (Code Division Multiple Access)-2000, W-CDMA (Wideband Code Division Multiple Access), and GSM (Global System for Mobile Communications), etc. The WLAN system includes IEEE (Institute of Electrical and Electronic Engineers) 802.11g, and WiMAX (Worldwide Interoperability for Microwave Access), etc. Communication through each network requires a line interface. A communication terminal apparatus serving both types of networks, therefore, needs two line interfaces. Such a communication apparatus equipped with two line interfaces has an advantage of being capable of communicating via a selected line interface.

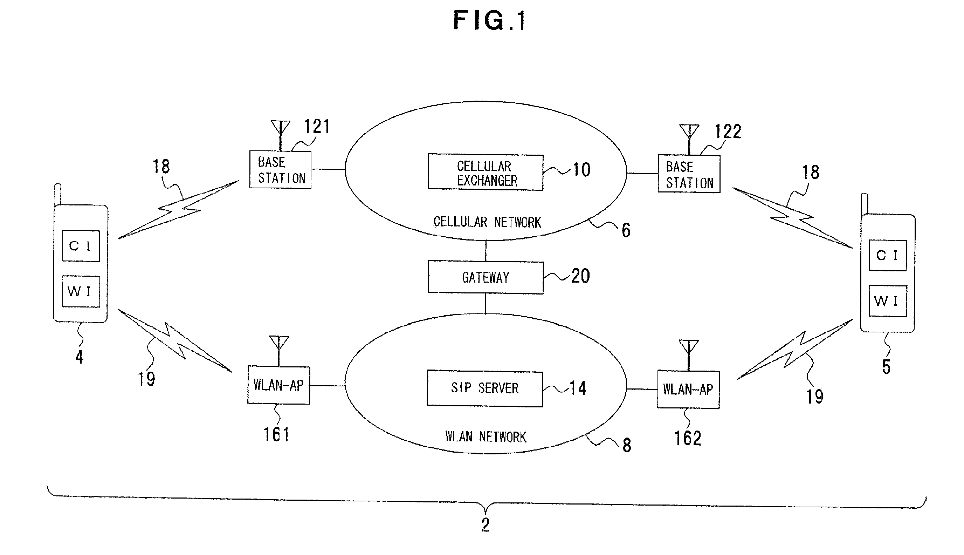

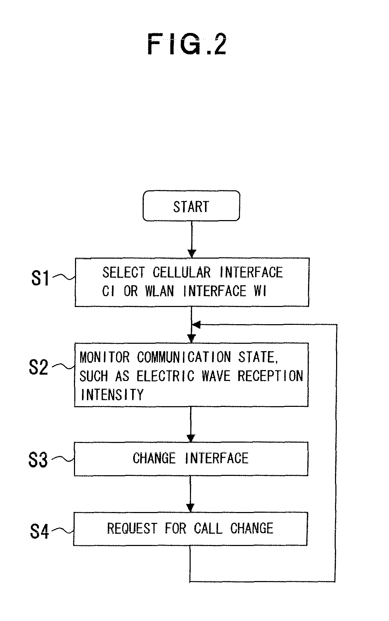

A technique concerning mobile equipment communication carried out across such networks as cellular network and WLAN is disclosed in Japanese Patent Application Laid-Open Publication No. 2005-73078. The disclosed technique relates to a communication apparatus working as a multimode terminal that is capable of transmission/reception at a frequency band used for a radio LAN and at a frequency band use for a cellular phone as well. The communication apparatus, according to the technique, changes power supply to a signal processing unit according to a reception state to stop unnecessary power supply, thus realize less power consumption (see ABSTRACT, Figs. 1, 2, etc.).

In operating a communication apparatus equipped with a plurality of interfaces, current supply to every interface results in unnecessary power consumption. For portable equipment powered by a battery, such unnecessary power consumption affects the life of the equipment significantly. Cutting off power supply to an interface on rest, therefore, suppresses power consumption, and, in a case of portable equipment, contributes to a longer battery life. Stopping power supply to an interface on rest, however, disables the interface from communication, thus hampering a degree of freedom in communication.

According to the communication apparatus and a communication method described in Japanese Patent Application Laid-Open Publication No. 2005-73078, power supply to one high-frequency unit is maintained continuously, and power supply to one signal processing unit and to the other high-frequency unit and the other signal processing unit is changed according to a reception state. This results in power supply to both high-frequency units when communication is carried out using the other high-frequency unit, which puts a limit on a reduction in power consumption.

In radio communication, electric wave reception intensity affects communication quality. Insufficient reception intensity, therefore, makes communication impossible. A communication apparatus equipped with a plurality of interfaces serving such networks as cellular network and WLAN can select a network according to an electric wave reception intensity level. Such network selection is an advantage allowing the avoidance of communication interruption due to a decline in electric wave reception intensity.

Providing interfaces operating according to electric wave reception intensity or a communication condition has been a goal to offer a highly convenient communication environment without impairing a degree of freedom in communication. Japanese Patent Application Laid-Open Publication No. 2005-73078, however, discloses or hints no solution to achieve such a goal.

### SUMMARY OF THE INVENTION

An object of the present invention relates to a communication apparatus equipped with a plurality of interfaces serving a plurality of networks, which communication apparatus selects an interface according to an electric wave reception intensity level to reduce power consumption and contribute to the maintenance of reliability in communication.

Another object of the present invention relates to a communication apparatus equipped with a plurality of interfaces serving a plurality of networks, which communication apparatus maintains on-going communication by changing over to another network in response to a selection of an interface.

To achieve the above objects, the present invention relates to a communication apparatus that is connected by radio to a plurality of networks for communication via each of the networks and that includes a plurality of interfaces serving the plurality of networks, and a control unit that switches connection to a power supply and that switches to communication corresponding thereto. Connecting any one of these interfaces to the power supply to actuate the connected interface ensures execution of communication. During the communication, the powered interface is monitored for its communication state. If the communication state of the interface deteriorates, another interface on rest is connected to the power supply, and communication connection is changed from the interface on communication to the interface on rest. In this manner, carrying out changeover between interfaces while maintaining on-going communication keeps the continuity and reliability of the communication intact. In addition, selective connection of an interface to the power supply brings advantages of slower consumption of a battery, etc., thus leading to power saving.

Thus, in order to achieve the above objects, according to a first aspect of the present invention there is provided a communication apparatus connected wirelessly to a plurality of networks to execute communication through each network, the communication apparatus comprising a plurality of interfaces corresponding to the networks; and a controlling unit that connects any one of the interfaces to a power supply to actuate the connected interface, and that connects an interface on rest to the power supply according to a communication state of an interface on communication to change communication connection from the interface on communication to the interface that has been on rest, wherein the communication apparatus changes the interfaces while causing the interfaces to maintain communication with the other party's communication apparatus.

To achieve the above objects, the communication apparatus may also include a communication controlling unit that causes the interface on communication to transmit information indicating communication connection changeover when communication connection is changed from the interface on communication to the interface that has been on rest. The communication apparatus may further include the power supply to which the plurality of interfaces corresponding to the networks are connected; and a connection changeover unit that changes connection between the interfaces and the power supply. In the communication apparatus, the interface includes a signal processing unit that processes a signal to transmit or a signal to receive; and a radio communication unit that transmits the signal in a form of a radio signal or receives a radio signal, and wherein the radio communication unit is connected to the power supply to check an electric wave reception state, and the signal processing unit is connected to the power supply according to the electric wave reception state.

In order to achieve the above objects, according to a second aspect of the present invention there is provided a server disposed in a network connected to a communication apparatus to communicate with the communication apparatus, the server comprising: a reception unit that receives a request for a call change from the communication apparatus having a plurality of interfaces, the request being made upon changeover of the interfaces; and an informing unit that informs another network of call change request information when the reception unit receives the call change request information.

To achieve the above objects, according to a third aspect of the present invention, there is provided a relay apparatus that is connected to a plurality of networks connected to a communication apparatus and that relays between each network, the relay apparatus having a controlling unit that receives call change request information from a network communicating with the communication apparatus to change a call, wherein the relay apparatus changes the call to a network corresponding to an interface of the communication apparatus.

To achieve the above objects, according to a fourth aspect of the present invention, there is provided a communication system including a plurality of networks and a communication apparatus having a plurality of interfaces, the apparatus being connected to the networks wirelessly to carry out communication, wherein the communication system has a changeover processing unit that receives information of changeover of communication with the networks from the communication apparatus, the communication changeover information being received upon changeover of the interfaces, and that changes a network communicating with an interface of the communication apparatus.

To achieve the above objects, according to a fifth aspect of the present invention, there is provided a communication method of wirelessly connecting a plurality of networks to execute communication through each network, the method including the steps of connecting any one of interfaces to a power supply to actuate the connected interface; monitoring a communication state of an interface on communication; connecting an interface on rest to the power supply according to the communication state to actuate the connected interface; and changing communication connection from the interface on communication to another interface, wherein the method changes the interfaces while causing the interfaces to maintain communication with the other party's communication apparatus.

To achieve the above objects, the communication method may further include a step of causing the interface on communication to transmit communication changeover information when communication connection is changed from the interface on communication to the interface that has been on rest.

To achieve the above objects, according to a sixth aspect of the present invention, there is provided a communication program for a computer to execute to carry out communication, the program including the steps of executing a process of connecting any one of interfaces to a power supply; monitoring a communication state of an interface on communication and determining on a deterioration of the communication state; executing a process of connecting an interface on rest to the power supply according to the communication state; and executing a process of changing communication connection from the interface on communication to another interface.

To achieve the above objects, the communication program may further include the steps of executing a process of changing communication connection from the interface on communication to the interface that has been on rest; and executing a process of causing the interface on communication to transmit communication changeover information upon changing the communication connection.

To achieve the above objects, according to a seventh aspect of the present invention, there is provided a computer-readable recording medium storing a communication program for a computer to execute to carry out communication, the program including steps for the computer to execute, the steps including: executing a process of connecting any one of interfaces to a power supply; monitoring a communication state of an interface on communication and determining on a deterioration of the communication state; executing a process of connecting an interface on rest to the power supply according to the communication state; and executing a process of changing communication connection from the interface on communication to another interface.

To achieve the above objects, in the computer-readable recording medium, the recording medium storing the communication program for the computer to execute, the program further including the steps of: executing a process of changing communication connection from the interface on communication to the interface that has been on rest; and executing a process of causing the interface on communication to transmit communication changeover information upon changing the communication connection.

The features and advantages of the present invention are as follows.
(1) Changing power supply connection to the interfaces while maintaining communication enables power saving. Changeover between the interfaces allows the maintenance of continuity and reliability of communication.
(2) The interfaces allow a selection of a network. This enables communication according to a selection condition of electric wave reception intensity, a priority selection such as a preferred charge terms, etc., thus contributes to an improvement in terms of economy in addition to the maintenance of reliability of communication.
(3) Selection of an interface can be automatized.

Other objects, features, and advantages of the present invention will be clearly understood by referring to the accompanying drawings and embodiments.

### BRIEF DESCRIPTION OF THE DRAWINGS

Fig. 1 depicts a communication system according to a first embodiment;
Fig. 2 is a flowchart of a process procedure executed at a communication terminal apparatus;
Fig. 3 is a flowchart of a process procedure executed at a network;
Fig. 4 depicts an example of the communication terminal apparatus;
Fig. 5 depicts a structural example of a program/data storage memory;
Fig. 6 depicts another example of the communication terminal apparatus;
Fig. 7 depicts an example of a cellular exchanger;
Fig. 8 depicts a structural example of a program/data storage memory;
Fig. 9 depicts an example of an SIP server;
Fig. 10 depicts a structural example of a program/data storage memory;
Fig. 11 depicts an example of a gateway;
Fig. 12 depicts a structural example of a program/data storage memory;
Fig. 13 is a flowchart of a process procedure according to a communication program of the communication terminal apparatus;
Fig. 14 is a flowchart of a process procedure according to a communication program of the SIP server;
Fig. 15 is a flowchart of a process procedure according to a communication program of the gateway;
Fig. 16 is a flowchart of a process procedure according to a communication program of the cellular exchanger;
Fig. 17 is a sequence diagram of a process procedure according to a communication program executed by the communication terminal apparatus, the network, and the other party's communication terminal apparatus;
Fig. 18 is another sequence diagram of the process procedure according to the communication program executed by the communication terminal apparatus, the network, and the other party's communication terminal apparatus;
Fig. 19 is another sequence diagram of the process procedure according to the communication program executed by the communication terminal apparatus, the network, and the other party's communication terminal apparatus;
Fig. 20 is still another sequence diagram of the process procedure according to the communication program executed by the communication terminal apparatus, the network, and the other party's communication terminal apparatus;
Fig. 21 depicts communication between the communication terminal apparatuses carried out via the SIP server only;
Fig. 22 depicts communication between the communication terminal apparatuses carried out via the SIP server, the gateway, and the cellular exchanger;
Fig. 23 is another flowchart of the process procedure according to the communication program of the communication terminal apparatus;
Fig. 24 depicts communication between the communication terminal apparatuses carried out via the cellular exchanger only;
Fig. 25 depicts communication between the communication terminal apparatuses carried out via the cellular exchanger, the gateway, and the SIP server;
Fig. 26 depicts a structural example of a communication terminal apparatus according to a second embodiment;
Fig. 27 is a flowchart of a process procedure of the communication terminal apparatus according to the second embodiment;
Fig. 28 is a flowchart of a subroutine on a call change;
Fig. 29 is a flowchart of a subroutine on a process of a request for a call change sent to the network side;
Fig. 30 is a flowchart of a process procedure of a communication terminal apparatus according to a third embodiment;
Fig. 31 depicts a communication system according to another embodiment; and
Fig. 32 depicts a communication system according to another embodiment.

### DETAILED DESCRIPTION OF THE PREFERRED EMBODIMENTS

### <First Embodiment>

A first embodiment of the present invention will now be described with reference to Fig. 1. Fig. 1 depicts a communication system to which the present invention applies.

As shown in Fig. 1, the communication system 2 includes a communication apparatus, which is, for example, a communication terminal apparatus 4, and a plurality of communication lines (network), which are, for example, a cellular network 6 and an Internet-based network, such as wireless LAN (Wireless Local Area Network: WLAN). The communication system 2 is constructed as a system capable of communication through the cellular network 6 or the WLAN network 8. The communication system 2 offers a wider range of communication by operating in such a way that connection of a cellular interface CI and of a WLAN interface WI to a power supply is changed at the communication terminal apparatus 4 according to a communication condition of electric wave reception intensity, etc., and that either cellular network 6 or WLAN 8 is selected for communication while communication (call) between the communication terminal apparatus 4 and another apparatus to communicate with, for example, the other party's communication terminal apparatus 5 is maintained.

The communication terminal apparatus 4 and the other party's communication terminal apparatus 5 are each provided with the cellular interface CI corresponding to the cellular network 6 and the WLAN interface WI corresponding to the WLAN 8. Each interface constitutes a communication unit for each network. Discriminating information, such as different telephone numbers, is set on the cellular interface CI and on the WLAN interface WI to identify a line route.

The cellular network 6 includes a cellular exchanger 10 that serves as a server for the communication terminal apparatuses 4, 5, and a plurality of base stations 121, 122---. The WLAN 8 includes an SIP (Session Initiation Protocol) server 14 that serves as a server for the communication terminal apparatuses 4, 5, and a plurality of WLAN access points (WLAN-AP) 161, 162---. The communication terminal apparatus 4 is connected to the cellular exchanger 10 via the base station 121, using a connection medium of cellular electric wave 18, and to a relay station of the WLAN-AP 161, using a connection medium of a WLAN electric wave 19. Likewise, the other party's communication terminal apparatus 5 is connected to the cellular exchanger 10 via the base station 122, using the cellular electric wave 18, and to a relay station of the WLAN-AP 162, using the WLAN electric wave 19. This interconnected relation allows the establishment of a call between the communication terminal apparatus 4 and the other party's communication terminal apparatus 5.

A gateway 20 is disposed between the cellular network 6 and the WLAN 8 in connection with them, where the gateway 20 serves as a relay apparatus that switches a call between the cellular network 6 or the WLAN 8 and the communication terminal apparatus 4. The cellular network 6 and the WLAN 8 communicate with each other via the gateway 20.

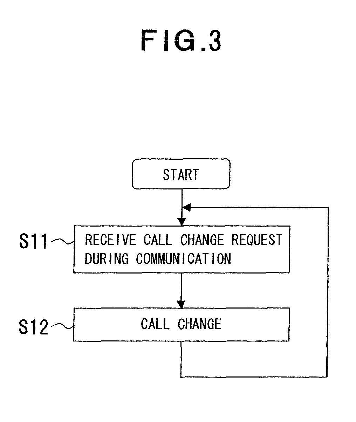

A communication method used for the communication system 2 will be described with reference to Figs. 2, 3. Fig. 2 is a flowchart of a process procedure executed at the communication terminal apparatus 4, and Fig. 3 is a flowchart of a process procedure executed at the network.

As shown in Fig. 2, the communication terminal apparatus 4 selects either cellular interface CI or WLAN interface WI (step S1) to set a call. Selection of either cellular interface CI or WLAN interface WI is carried out by connecting either of the interfaces to the power supply. The call mentioned herein means an event that a user is using a communication line for communication in a state of monopoly from the start, at which connection to the line is made, to the end of the communication.

During communication, the cellular interface CI and the WLAN interface WI are each monitored for a communication state, such as electric wave reception intensity (step S2). Communication state monitoring is carried out by comparing an intensity level of an electric wave received through the cellular interface CI or the WLAN interface WI with, for example, a reference value. With an intensity level of a received electric wave lower than the reference value, the deterioration of a communication state is concluded, and, with an intensity level exceeding the reference value, a fine communication state is concluded. For example, when a communication state deteriorates during communication through the WLAN interface WI, the cellular interface CI, which is not operating, is connected to the power supply, and electric wave reception intensity, etc., at the cellular interface CI is checked. If the cellular interface CI is determined to be capable of communication, communication connection is changed to the cellular interface CI (step S3), which takes over the communication and sends a request for a call change to the network side (step S4). Call change means that a call is shifted from the cellular interface CI to the WLAN interface WI or vice versa, that is, communication connection is handed over from one interface to another while communication is maintained. Such a process is continued till the end of communication. This communication method is put in practice, for example, by executing a communication program that will be explained later.

As shown in Fig. 3, the network side receives the request for the call change during communication with the communication terminal apparatus 4 (step S11). Based on the request, the network side changes a call (step S12), and maintains the communication. This call change is carried out by the cellular network 6 and the WLAN 8 via the gateway 20. Such a process is continued till the end of communication. This communication method is put in practice, for example, by executing a communication program that will be explained later.

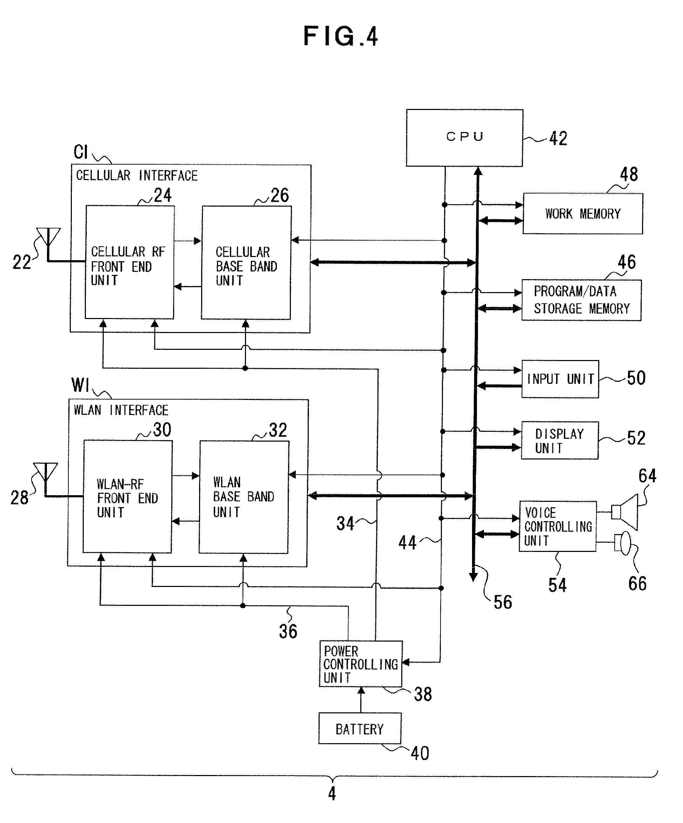

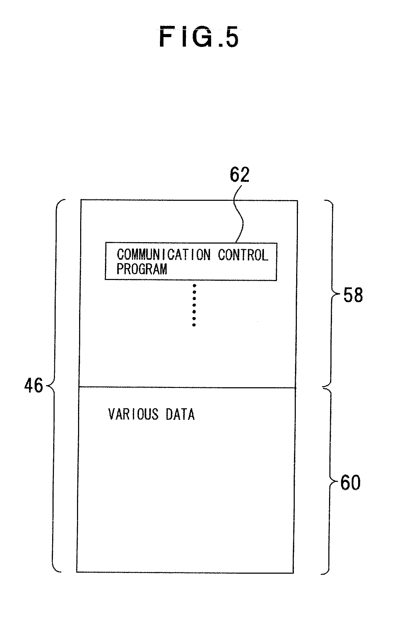

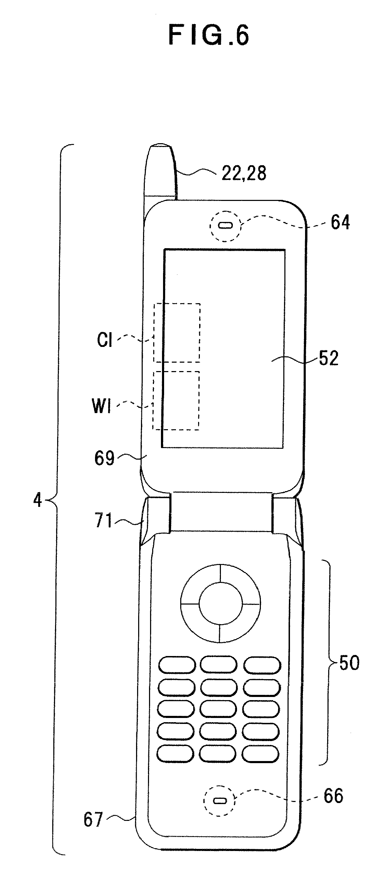

The communication terminal apparatus 4 will then be described with reference to Figs. 4, 5, 6. Fig. 4 depicts an example of the communication terminal apparatus, Fig. 5 depicts a structural example of a program/data storage memory, and Fig. 6 depicts another example of the communication terminal apparatus. In Figs. 4, 6, the same components as described in Fig. 1 are denoted by the same reference numerals.

As shown in Fig. 4, the communication terminal apparatus 4 includes the cellular interface CI, and the WLAN interface WI. The cellular interface CI is a functional unit that operates in response to the base station 121 connected to the cellular exchanger 10. The cellular interface CI includes an antenna 22, a cellular RF (Radio Frequency) front end unit 24, and a cellular base band unit 26. The WLAN interface WI is a functional unit that operates in response to the WLAN-AP 161 at the SIP server 14 side. The WLAN interface WI includes an antenna 28, a WLAN-RF front end unit 30, and a WLAN base band unit 32. While being used for communication, an incoming electric wave at the cellular interface CI and at the WLAN interface WI is used also for electric wave reception intensity monitoring, which is carried out for changeover between the cellular interface CI and the WLAN interface WI in connection to the power supply.

The cellular interface CI and the WLAN interface WI each operates independently. The cellular interface CI and the WLAN interface WI have power feeder cables 34 and 36, respectively, and are connected to a battery 40 via the power feeder cables 34, 36 and a common power controlling unit 38, which controls power supply from the battery 40. Specifically, the power controlling unit 38 has a power supply changing function, and selects power supply to the cellular interface CI or to the WLAN interface WI on necessary basis. The cellular interface CI, the WLAN interface WI, and the power controlling unit 38 are put in action by a controlling means disposed in the communication terminal apparatus 4, that is, a computer-running communication control program 62 (Fig. 5), etc.

A CPU (Central Processing Unit) 42 is connected to the interfaces CI, WI and to the power controlling unit 38 via a control line 44. The CPU 42 constitutes a controlling unit or an information processing unit that executes monitoring of electric wave reception intensity, power supply control, communication control, and other control. To the CPU 42, a program/data storage memory 46, a work memory 48, an input unit 50, a display unit 52, and a voice controlling unit 54 are connected via the control line 44 and a data bus 56. The program/data storage memory 46 consists of a recording medium such as a ROM (Read Only Memory). The program/data storage memory 46 is a recording medium that stores computer-running programs and data. For example, a program storage area 58 and a data storage area 60 are set in the program/data storage memory 46, as shown in Fig. 5. The program storage area 58 stores programs including the communication control program 62, and the data storage area 60 stores various data. The work memory 48 consists of a RAM (Random Access Memory), and is used as a work area.

The input unit 50, being under control by the CPU 42, is a means that puts various pieces of information into the CPU 42. The input unit 50 is composed of, for example, a keyboard. The display unit 52 follows control by the CPU 42 to display various pieces of information, such as information of the other party's communication apparatus, information of a selected interface CI or WI, and e-mail information. The voice controlling unit 54 follows control by the CPU 42 to send and receive a phone call voice. The voice controlling unit 54 is, therefore, connected to a speaker 64 that reproduces and outputs an incoming call signal as a voice, and to a microphone 66 that receives an outgoing phone call voice and converts the phone call voice into an electric signal.

The communication terminal apparatus 4 has, for example, cases 67, 69 that can be folded together via a hinge 71, as shown in Fig. 6. The case 67 has the input unit 50 including a cursor key and character keys, and the microphone 66. The case 69 has the antennas 22, 28, the display unit 52 composed of, for example, an LCD (Liquid Crystal Display), the speaker 64, etc. The display unit 52 displays the power connection status, etc. of the cellular interface CI or the WLAN interface WI at the start of or during a phone conversation. When changeover of power supply connection to the interfaces is carried out manually, the display unit 52 displays a dialog or contents of setting instruction for changeover.

According to the communication terminal apparatus 4, either cellular interface CI or WLAN interface WI is connected to the power supply upon starting communication (call), and the communication is started. During the communication, monitoring of electric wave reception intensity level is carried out as monitoring of a communication state. When a communication state at the WLAN interface WI on communication deteriorates, the cellular interface CI is connected to the power supply while the communication is maintained, and electric wave reception intensity at the cellular interface CI is detected. If the cellular interface CI is determined to be in a fine communication state as a result of the detection, the communication through the WLAN interface WI is changed to communication through the cellular interface CI, and a request for communication changeover, i.e., a call change is sent to the network side. As a result, power supply connection is changed from the WLAN interface WI to the cellular interface CI, which changes an operating interface from the WLAN interface WI to the cellular interface CI. In response to this, at the network side, communication connection is changed from the WLAN 8 to the cellular network 6 to continue communication.

In this case, the cellular interface CI is monitored for a communication state. When the communication state of the cellular interface CI deteriorates, communication connection is changed again to the WLAN interface WI and the WLAN 8, and communication with the other party's communication apparatus is maintained.

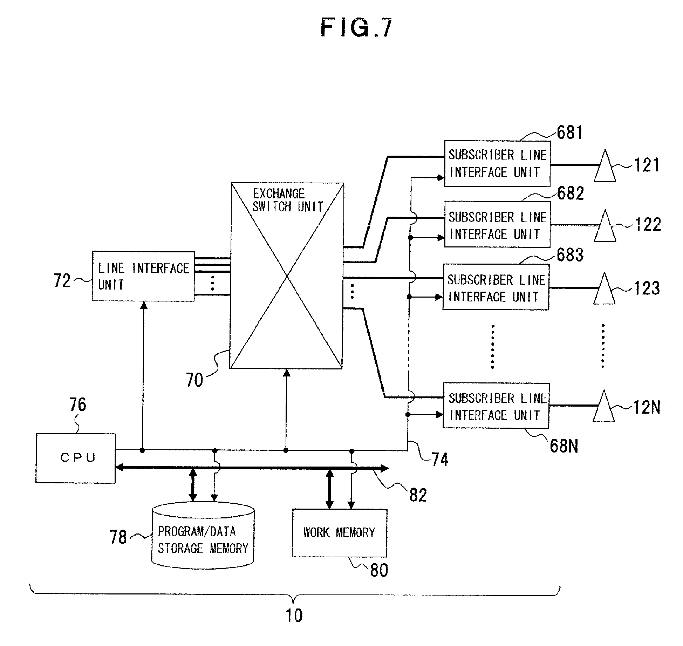

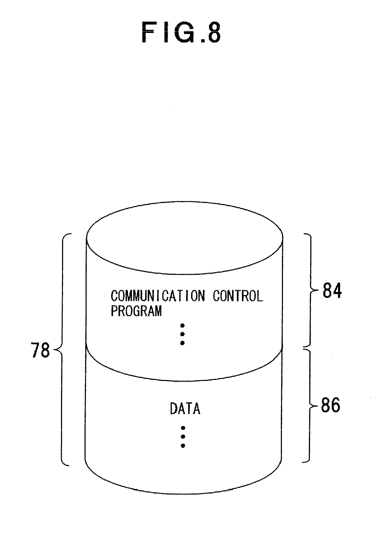

The cellular exchanger will then be described with reference to Figs. 7, 8. Fig. 7 depicts an example of the cellular exchanger, and Fig. 8 depicts a structural example of a program/data storage memory. In Figs. 7, the same components as described in Fig. 1 are denoted by the same reference numerals.

As shown in Fig. 7, the cellular exchanger 10 includes base stations 121, 122---, 12N, and subscriber line interfaces 681, 682, 683---, 68N, the base stations and interfaces serving a plurality of communication terminals including the communication terminal apparatus 4. The subscriber line interfaces 681, 682, 683---, 68N are connected to an exchange switch 70, to which a line interface 72 is connected. The exchange switch 70 selects the line interface 72 in response to an incoming call to establish connection between communicating apparatuses. The line interface 72 receives an incoming call signal from the line, and sends the signal to the exchange switch 70.

The subscriber line interfaces 681, 682, 683---, 68N, the exchange switch 70, and the line interface 72 are connected to a CPU 76, a program/data storage memory 78, and a work memory 80 via a control line 74 to constitute a computer. The CPU 76, the program/data storage memory 78, and the work memory 80 are interconnected via a data bus 82. The CPU 76 serves as a control unit and an information processing unit, and executes a program stored in the program/data storage memory 78 to control the subscriber lime interfaces 681, 682, 683- - - , 68N, the exchange switch 70, and the line interface 72. The CPU 76 receives an incoming call notice and a changeover instruction notice from the communication terminal apparatus 4, puts the notices into the program/data storage memory 78, and executes communication control, such as execution of the changeover instruction notice, in response to the reception of an incoming call. The program/data storage memory 78 is a recording medium storing computer-running programs and data, and has a program storage area 84 and a data storage area 86, as shown in Fig. 8. The program storage area 84 stores a communication control program corresponding to the communication control program 62. The work memory 80 is composed of a RAM, and is used as a work area.

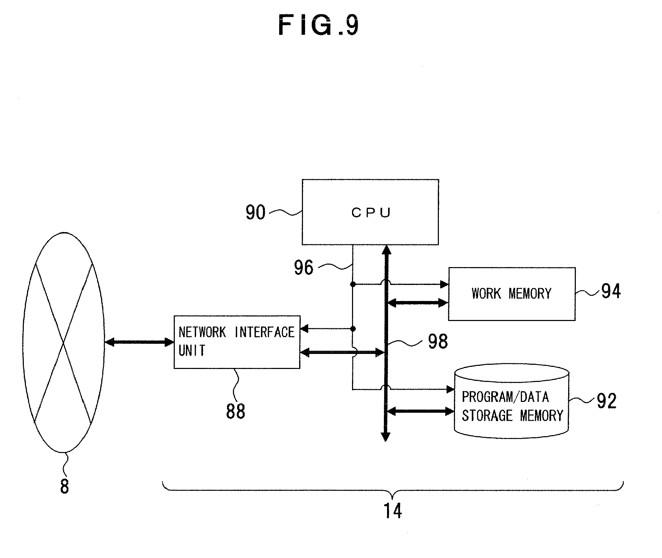

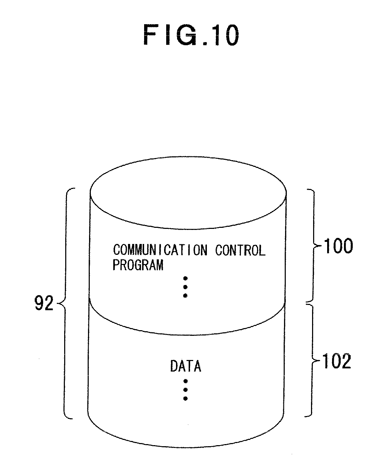

The SIP server will then be described with reference to Figs. 9, 10. Fig. 9 depicts an example of the SIP server, and Fig. 10 depicts a structural example of a program/data storage memory. In Fig. 9, the same components as described in Fig. 1 are denoted by the same reference numerals.

As shown in Fig. 9, the SIP server 14 includes a network interface 88 connected to the WLAN 8. A CPU 90, a program/data storage memory 92, and a work memory 94, which serve as a control unit or an information processing unit to constitute a computer, are connected to the network interface 88 via a control line 96 and a data bus 98. The program/data storage memory 92 is a recording medium storing computer-running programs and data, and has a program storage area 100 and a data storage area 102, as shown in Fig. 10. The program storage area 100 stores a communication control program corresponding to the communication control program 62. The work memory 94 is composed of a RAM, and is used as a work area.

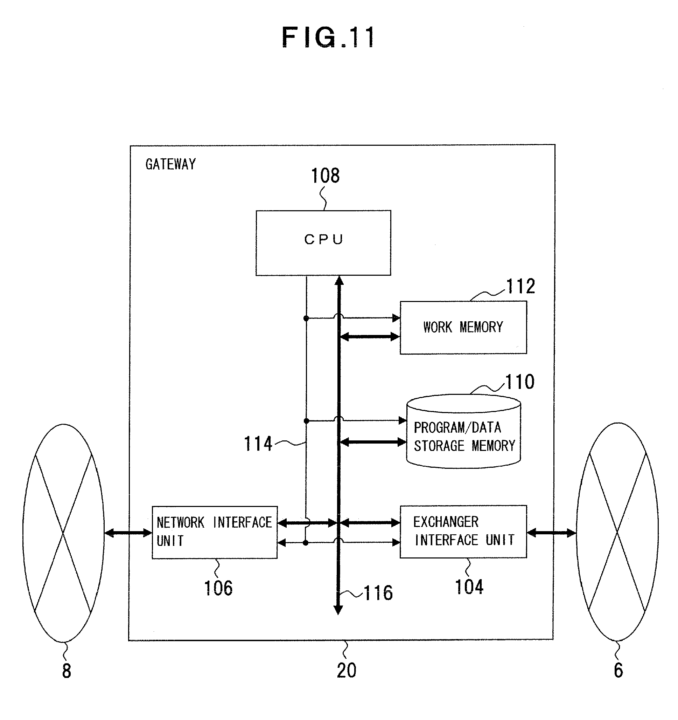

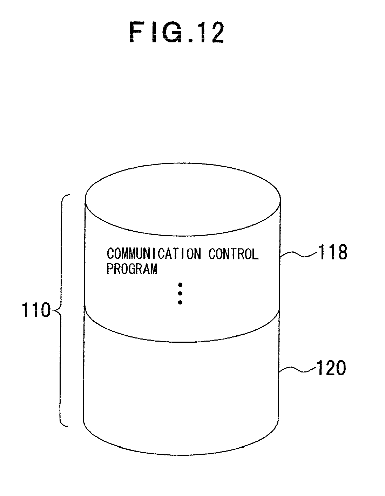

The gateway will then be described with reference to Figs. 11, 12. Fig. 11 depicts an example of a gateway, and Fig. 12 depicts a structural example of a program/data storage memory. In Fig. 11, the same components as described in Fig. 1 are denoted by the same reference numerals.

The gateway 20 is a device functioning as a network relay point or relay unit. As show in Fig. 11, the gateway 20 includes an exchanger interface 104, and a network interface 106. The gateway 20 also includes a CPU 108, a program/data storage memory 110, and a work memory 112, which are interconnected via a control line 114 and a data bus 116 to serve as a controlling unit or an information processing unit. The cellular network 6 is connected to the exchanger interface 104, and the WLAN 8 is connected to the network interface 106. The cellular network 6 is thus connected to the WLAN 8 via the gateway 20.

The program/data storage memory 110 is a recording medium storing computer-running programs and data, and has a program storage area 118 and a data storage area 120, as shown in Fig. 12. The program storage area 118 stores a communication control program corresponding to the communication control program 62. The work memory 112 is composed of a RAM, and is used as a work area.

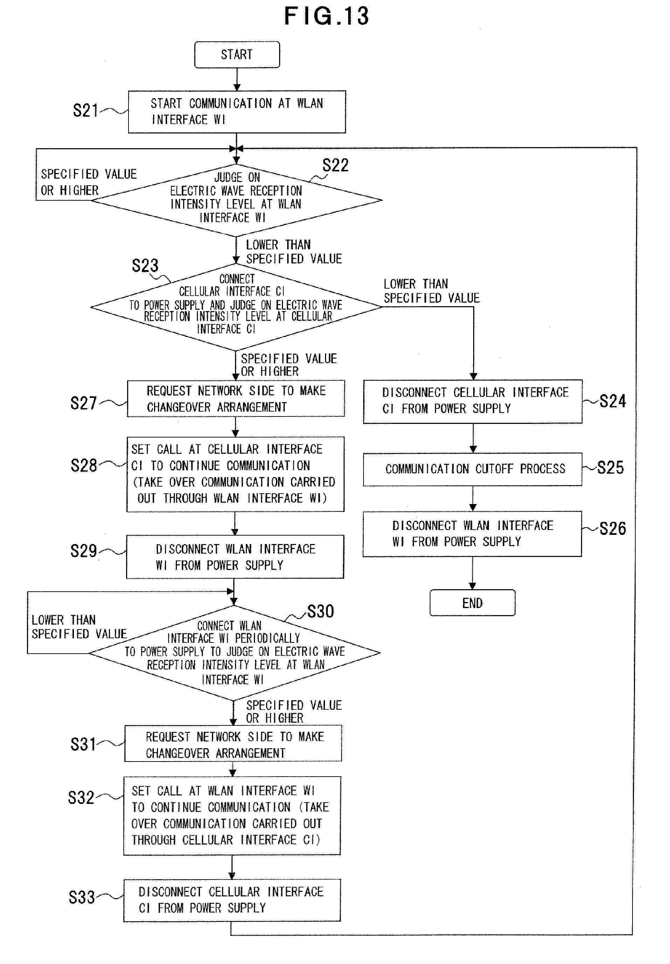

A process procedure of the communication terminal apparatus 4 will then be described with reference to Fig. 13. Fig. 13 is a flowchart of the process procedure according to a communication program of the communication terminal apparatus 4.

The process procedure represents a process executed according to the communication program of the communication terminal apparatus 4 for realizing the above communication method. According to the procedure, the interfaces are switched in connection during communication so that connection of the interfaces to the power supply is changed on each interface basis. Specifically, the front end unit and the base band unit are connected or disconnected all together to and from the power supply.

According to the process procedure, the WLAN interface WI is connected to the power supply at the start of communication to begin the communication (step S21). During the communication through the WLAN interface WI, an electric wave reception intensity level at the WLAN interface WI is measured, and a judgment is made on whether a resulting measurement is a specified value or higher, or lower than the specified value (step S22). When the measurement is the specified value or higher, the communication through the WLAN interface WI is maintained. When the measurement is lower than the specified value, the cellular interface CI is connected to the power supply, and an electric wave reception intensity level at the cellular interface CI is measured, then a judgment is made on whether a resulting measurement is a specified value or higher, or lower than the specified value (step S23). If the measurement is lower than the specified value, communication through the cellular interface CI is impossible. The cellular interface CI is, therefore, disconnected from the power supply (step S24). When the communication is over, a communication cutoff process is executed (step S25) to cut off power supply to the WLAN interface WI (step S26) and end the communication.

If the measurement of the electric wave reception intensity level at the cellular interface CI is the specified value or higher at step S23, communication through the cellular interface CI is possible. As a result, a request for connection changeover arrangement is sent to the cellular network 6 (cellular exchanger 10) and to the WLAN 8 (SIP server 14) (step S27), and connection (call) at the cellular interface CI is set, which is followed by passing over of communication connection from the WLAN interface WI to the cellular interface CI (step S28) to continue the communication. After the above setting is completed, the WLAN interface WI is disconnected from the power supply (step S29).

While communication is going on through the cellular interface CI, the WLAN interface WI is connected to the power supply periodically to measure an electric wave reception intensity level at the WLAN interface WI and determine whether a resulting measurement is the specified value or higher, or lower than the specified value (step S30). When the measurement is lower than the specified value, the communication through the cellular interface CI is maintained. When the measurement is the specified value or higher, a request for connection changeover arrangement is sent to the cellular network 6 (cellular exchanger 10) and to the WLAN 8 (SIP server 14) (step S31), and connection (call) at the WLAN interface WI is set to continue the communication (passing over of a communication connection from the cellular interface CI to the WLAN interface WI) (step S32). After the above setting is completed, the cellular interface CI is disconnected from the power supply (step S33).

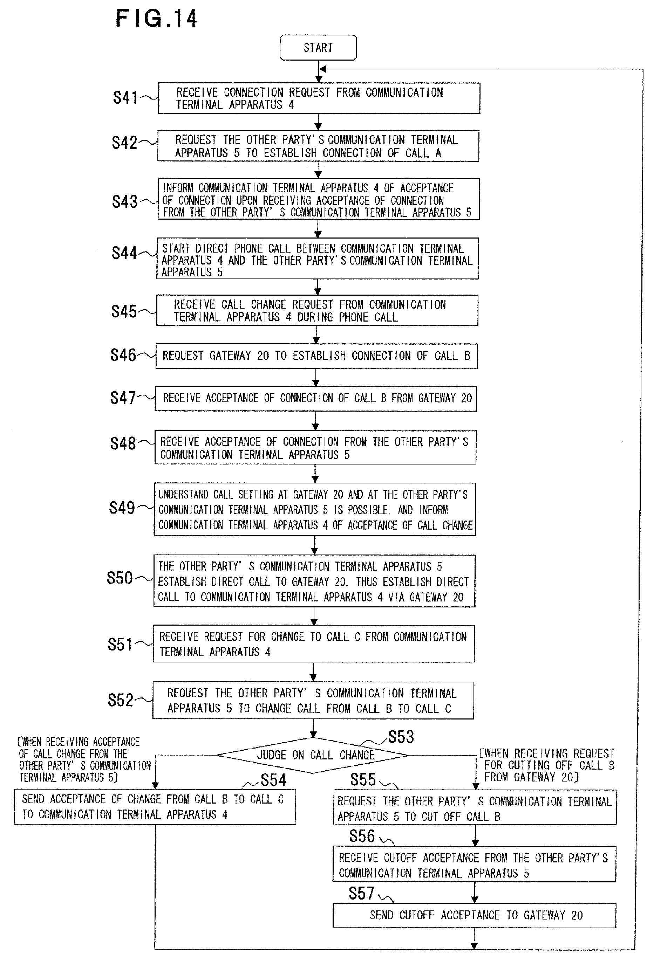

A process procedure of the SIP server 14 will then be described with reference to Fig. 14. Fig. 14 is a flowchart of the process procedure according to a communication program of the SIP server 14.

The process procedure represents a process to execute according to the communication program for realizing a communication method that is executed at the SIP server 14 in response to a request for connection using the WLAN interface WI of the communication terminal apparatus 4. At the start of communication, either WLAN interface WI or cellular interface CI is used with no priority. In this case, the WLAN interface WI is used in priority to start communication to sequentially establish a call A, a call B, and a call C. The call A represents the connection between the WLAN interface WI of the communication terminal apparatus 4 and the WLAN interface WI of the other party' s communication terminal apparatus 5. The call B represents the connection between the cellular interface CI of the communication terminal apparatus 4 and the MLAN interface WI of the other party's communication terminal apparatus 5. The call C is established by changing the connection route of the call B, and represents the connection between the WLAN interface WI of the communication terminal apparatus 4 and the WLAN interface WI of the other party's communication terminal apparatus 5. This means that the call A is a call that is set first as a state of phone call in progress, where both communication terminal apparatuses 4, 5 communicate with each other using the WLAN interfaces WI. During phone communication under the call A, if the communication state of the WLAN interface WI of the communication terminal apparatuses 4 deteriorates, communication connection is changed from the WLAN interface WI to the cellular interface CI at the communication terminal apparatuses 4 to establish the call B. During phone communication under the call B, if the communication state of the cellular interface CI of the communication terminal apparatuses 4 deteriorates, communication connection is changed back again to the WLAN interface WI at the communication terminal apparatuses 4 to establish the call C. In this procedure, communication connection is returned from the cellular interface CI to the WLAN interface WI to meet the condition of giving priority in use to the WLAN interface WI, which results in the call C. In other words, communication connection is given back to an interface to be used in priority when three or more interfaces are provided.

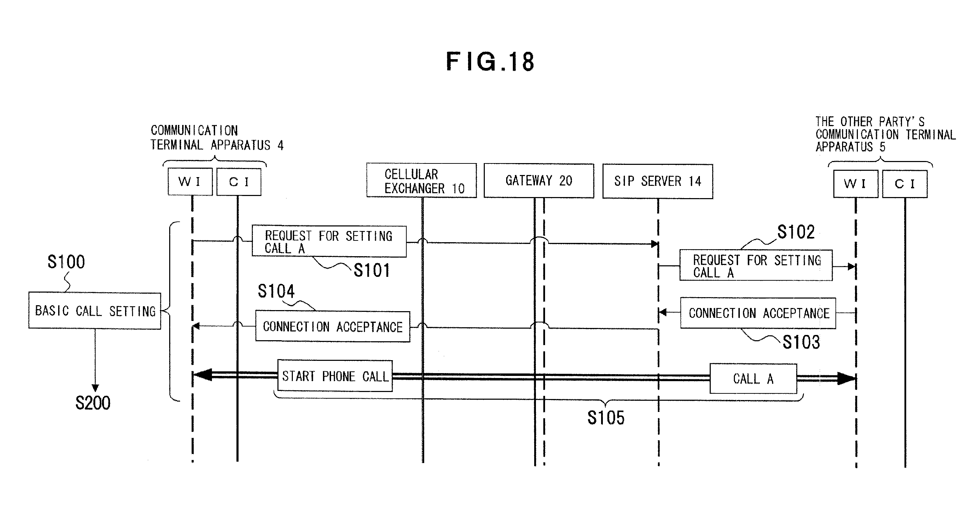

Accordingly, the SIP server 14 receives a request for connection from the communication terminal apparatus 4 (step S41). Upon receiving the request for connection, the SIP server 14 requests the other party's communication terminal apparatus 5, which is the apparatus communicating with the server, to establish the connection of call A (call A shown in Fig. 18) (step S42). When receiving an acceptance of the connection from the other party's communication terminal apparatus 5, the SIP server 14 informs the communication terminal apparatus 4 of the acceptance (step S43).

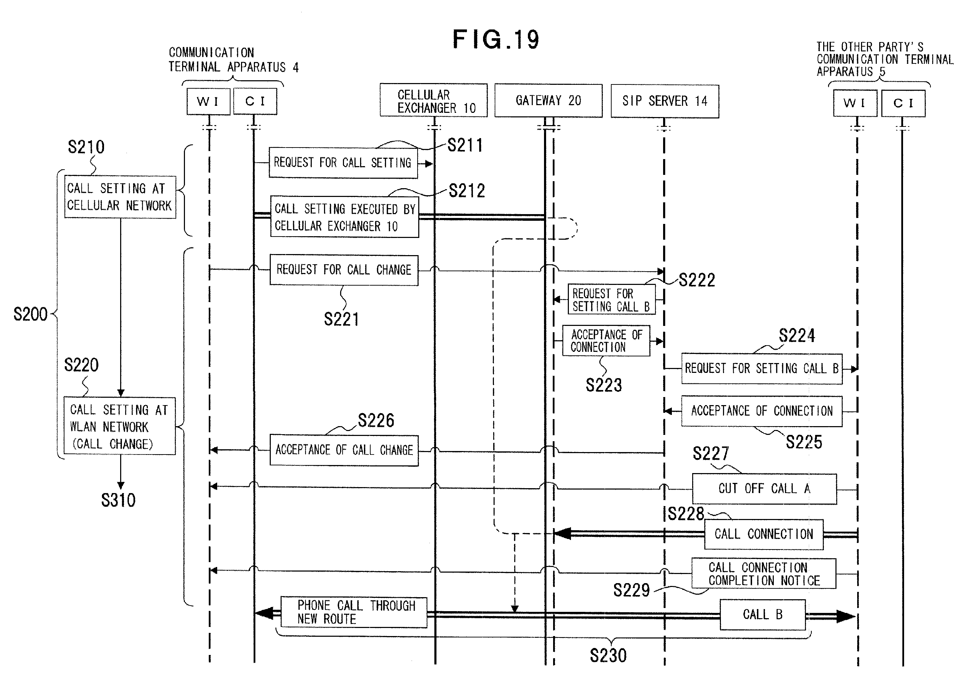

This leads to the start of a direct phone call between the communication terminal apparatus 4 and the other party's communication terminal apparatus 5 (step S44). If the SIP server 14 receives a call change request from the communication terminal apparatuses 4 during the phone call (step S45), the SIP server 14 requests the gateway 20 to establish the connection of call B (call B shown in Fig. 19) (step S46).

When the SIP server 14 receives an acceptance of the connection of call B from the gateway 20 (step S47) and from the other party's communication terminal apparatuses 5 (step S48), the SIP server 14 understands that setting the call B at the gateway 20 and the other party' communication terminal apparatuses 5 is possible. The SIP server 14 then informs the communication terminal apparatuses 4 of an acceptance of the call change (step S49). As a result, the other party's communication terminal apparatus 5 establishes a direct call to the gateway 20, thus establishes a direct call to the communication terminal apparatuses 4 via the gateway 20 (step S50).

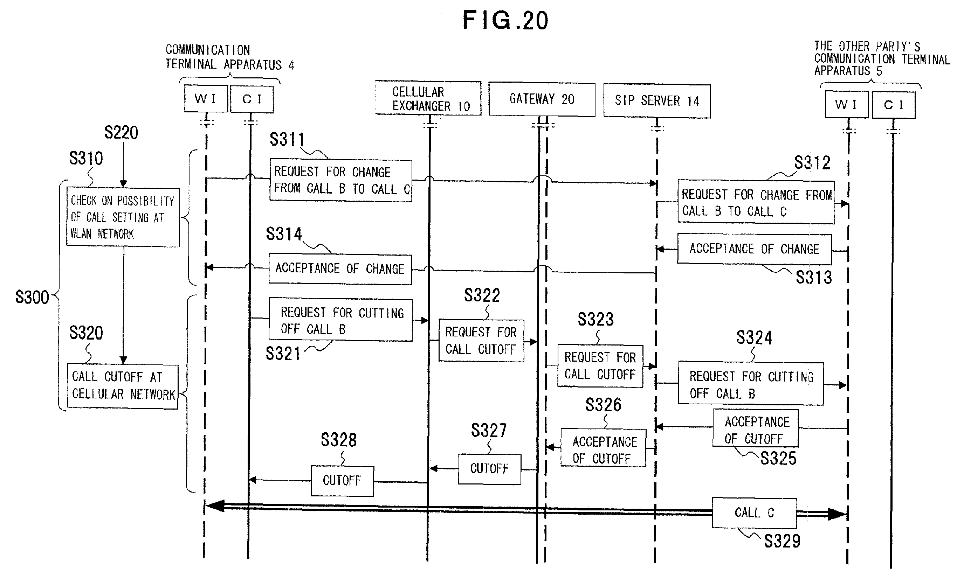

When the SIP server 14 receives a request for change to the call C (call C shown in Fig. 20) from the communication terminal apparatuses 4 (step S51), the SIP server 14 requests the other party's communication terminal apparatus 5 to change a call to the call C (step S52), and judges on the call change (step S53).

When receiving an acceptance of the call change from the other party's communication terminal apparatus 5 at step 53, the SIP server 14 sends an acceptance notice of change to the call C to the communication terminal apparatuses 4 (step S54). When receiving a request for cutting off the call B from the gateway 20, the SIP server 14 requests the other party's communication terminal apparatus 5 to cut off the call B (step S55). Upon receiving a cutoff acceptance from the other party's communication terminal apparatus 5 (step S56), the SIP server 14 sends a cutoff acceptance notice to the gateway 20 (step S57).

According to the above process procedure, the SIP server 14 executes a call setting process and a call cutoff process while maintaining on-going communication.

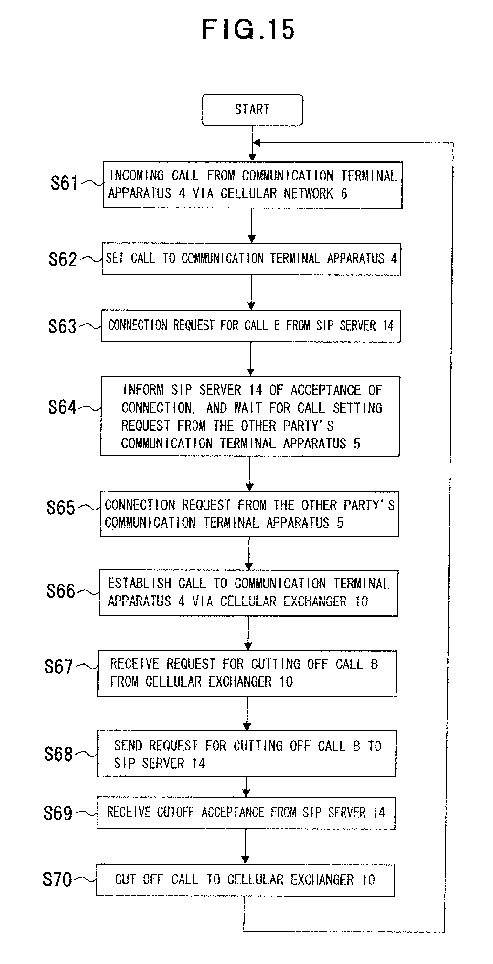

A process procedure of the gateway 20 will then be described referring to Fig. 15. Fig. 15 is a flowchart of the process procedure according to a communication program of the gateway 20.

The process procedure of the gateway 20 represents a process according to a communication program for realizing a communication method for the communication terminal apparatus 4 and the SIP server 14. The procedure is executed in a case where an incoming call is processed in a connection route through the communication terminal apparatus 4 and the cellular network 6.

When receiving an incoming call from the communication terminal apparatus 4 via the cellular network 6 (step S61), the gateway 20 sets a call to the communication terminal apparatus 4 (step S62). When receiving a request for connection for the call B from the SIP server 14 (step S63), the gateway 20 informs the SIP server 14 of an acceptance of connection for the call B, and waits for a call setting request from the other party's communication terminal apparatus 5 (step S64).

Upon receiving the connection request from the other party's communication terminal apparatus 5 (step S65), the gateway 20 establishes the call to the communication terminal apparatus 4 via the cellular exchanger 10 (step S66). When receiving a request for cutting off the call B from the cellular exchanger 10 (step S67), the gateway 20 requests the SIP server 14 to cut off the call B (step S68) . Upon receiving a replay of accepting cutoff of the call B from the SIP server 14 (step S69), the gateway 20 cuts off a call to the cellular exchanger 10 (step S70), and ends the process.

According to the above process procedure, the gateway 20 executes a call setting process and a call cutoff process while maintaining on-going communication.

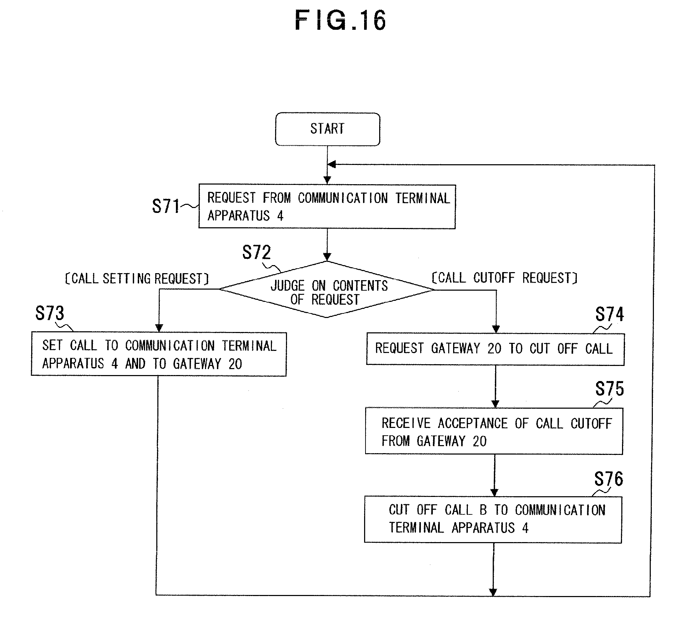

A process procedure of the cellular exchanger 10 will then be described referring to Fig. 16. Fig. 16 is a flowchart of the process procedure according to a communication program of the cellular exchanger 10. The process procedure is a process to execute according to the communication program for realizing a communication method.

The cellular exchanger 10 receives a request for a call setting or a call cutoff from the communication terminal apparatus 4 on communication, the call setting or cutoff being executed upon changeover between the WLAN interface WI and the cellular interface CI, and executes a process in response to the request.

Upon changeover between the WLAN interface WI and the cellular interface CI for connection at the communication terminal apparatus 4, the communication terminal apparatus 4 sends out a request for communication changeover. The cellular exchanger 10 receives the request from the communication terminal apparatus 4 (step S71), and judges on the contents of the request (step S72). When the content of the request is a call setting request, the cellular exchanger 10 sets a call to the communication terminal apparatus 4 and to the gateway 20 (step S73). When the content of the request is a call cutoff request, the cellular exchanger 10 requests the gateway 20 to cut off a call (step S74).

Upon receiving an acceptance of the call cutoff from the gateway 20 after making the request for the call cutoff (step S75), the cellular exchanger 10 cuts off the call B to the communication terminal apparatus 4 (step S76), and ends the process.

According to the above process procedure, the cellular exchanger 10 executes a call setting process and a call cutoff process in an interlocking operation with the communication terminal apparatus 4.

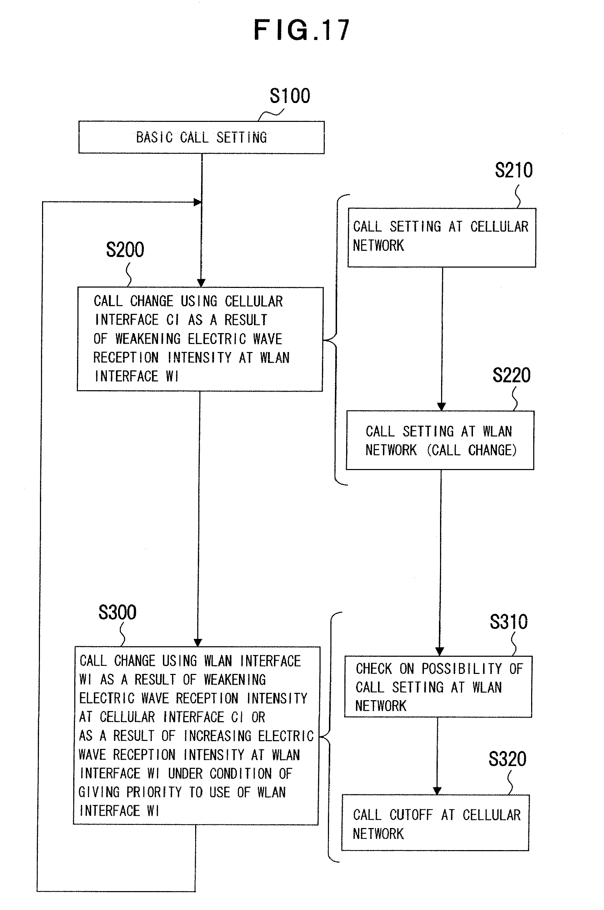

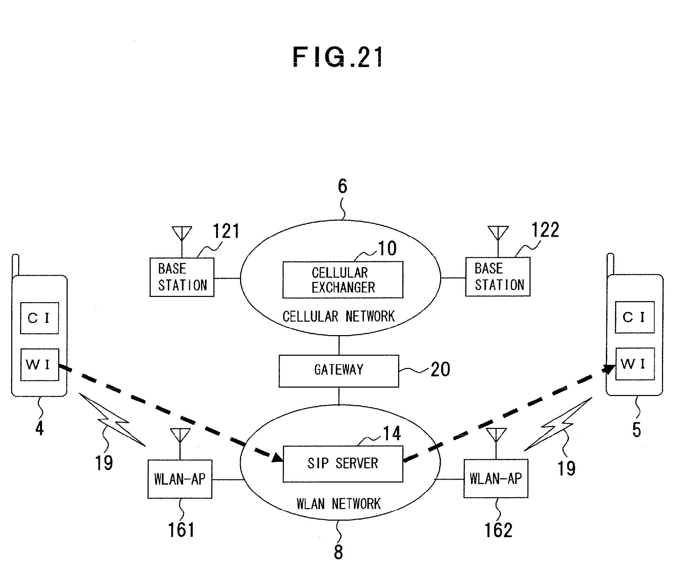

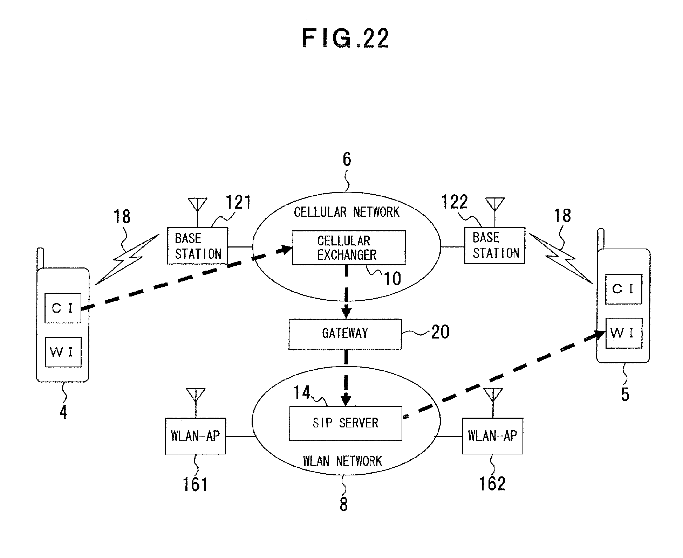

A process procedure of the communication terminal apparatus 4, the network, and the other party's communication terminal apparatus 5 will then be described referring to Figs. 17 to 22. Figs. 17 to 20 are sequence diagrams of the process procedure according to a communication program executed by the communication terminal apparatus 4, the network, and the other party's communication terminal apparatus 5. Fig. 21 depicts communication between the communication terminal apparatuses carried out via the SIP server only. Fig. 22 depicts communication between the communication terminal apparatuses carried out via the SIP server, the gateway, and the cellular exchanger. Calls A, B and C shown in Figs. 17, 18, 19, 20 correspond to the calls A, B and C shown in Figs. 14, 15, 16.

The process sequence shown in Figs. 17 to 20 is a sequence Of processes executed between the communication terminal apparatus 4 and the other party's communication terminal apparatus 5 via the cellular exchanger 10, the SIP server 14, and the gateway 20 at the network side. The sequence includes a process executed in response to a change in electric wave reception intensity.

As shown in Fig. 17, the process sequence includes a basic call setting process (step S100) (Fig. 18), a call change process using the cellular interface CI as a result of weakening electric wave reception intensity at the WLAN interface WI (step S200) (Fig. 19), and a call change process using the WLAN interface WI as a result of weakening electric wave reception intensity at the cellular interface CI (or as a result of increasing electric wave reception intensity at the WLAN interface WI under a condition of giving priority to the use of the WLAN interface WI) (step S300) (Fig. 20).

The call change process (step S200) includes call setting at the cellular network 6 (step S210), and call setting at the WLAN 8 (call change) (step S220). The call change process (step S300) includes a check on the possibility of call setting at the WLAN 8 (step S310), and cutoff of a call at the cellular network 6 (step S320).

In the basic call setting process (step S100), as shown in Fig. 18, the WLAN interface WI of the communication terminal apparatus 4 sends a request for setting the call A to the SIP server 14 (step S101), which in turn sends a request for setting the call A to the WLAN interface WI of the other party's communication terminal apparatus 5 (step S102). The WLAN interface WI of the other party's communication terminal apparatus 5 sends an acceptance of connection to the SIP server 14 (step S103), which then sends a connection acceptance notice to the WLAN interface WI of the communication terminal apparatus 4 (step S104). After these processes, phone communication (call A) starts between the WLAN interface WI of the communication terminal apparatus 4 and the WLAN interface WI of the other party's communication terminal apparatus 5 (step S105).

In the call setting process at the cellular network 6 (step S210), as shown in Fig. 19, the cellular interface CI sends a request for call setting to the cellular exchanger 10 (step S211), which executes call setting between the cellular interface CI and the gateway 20 (step S212).

In the call setting process (call change) at the WLAN 8 (step S220), the WLAN interface WI of the communication terminal apparatus 4 sends a request for call change to the SIP server 14 (step S221), which in response sends a request for setting the call B to the gateway 20 (step S222). The gateway 20 sends an acceptance of connection to the SIP server 14 (step S223), which then sends a request for setting the call B to the WLAN interface WI of the other party's communication terminal apparatus 5 (step S224). The WLAN interface WI of the communication terminal apparatus 5 sends a connection acceptance notice to the SIP server 14 (step S225). In response to this, the SIP server 14 sends a call change acceptance notice to the WLAN interface WIof the communication terminal apparatus 4 (step S226), and the WLAN interface WI of the other party's communication terminal apparatus 5 cuts off the call A to the WLAN interface WI of the communication terminal apparatus 4 (step S227). As a result, according to call setting by the cellular exchanger 10 (step S212), call connection is established between the gateway 20 and the WLAN interface WI of the other party's communication terminal apparatus 5 (step S228). The WLAN interface WI of the other party's communication terminal apparatus 5 then sends a call connection completion notice to the WLT3N interface WI of the communication terminal apparatus 4 (step S229). Hence the call B starts as a phone call through a new route (step S230).

In the process of checking on the possibility of call setting at the WLAN 8(step S310), as shown in Fig. 20, the WLAN interface WI of the communication terminal apparatus 4 sends a request for change from the call B to the call C to the SIP server 14 (step S311), which sends a request for change from the call B to the call C to the WLAN interface WI of the other party's communication terminal apparatus 5 (step S312). When the WLAN interface WI of the other party's communication terminal apparatus 5 sends a change acceptance notice to the SIP server 14 (step S313), the SIP server 14 sends a change acceptance notice to the WLAN interface WI of the communication terminal apparatus 4 (step S314).

In the call cutoff process at the cellular network 6 (step S320), the cellular interface CI of the communication terminal apparatus 4 sends a request for cutting off the call B to the cellular exchanger 10 (step S321), which sends a call cutoff request to the gateway 20 (step S322), which then sends a call cutoff request to the SIP server 14 (step S323) . The SIP server 14 thus sends a request for cutting off the call B to the WLAN interface WI of the other party's communication terminal apparatus 5 (step S324).

When the other party's communication terminal apparatus 5 accepts the call cutoff following the reception of the call cutoff request, the WLAN interface WI of the other party's communication terminal apparatus 5 sends a cutoff acceptance notice to the SIP server 14 (step S325), which sends a cutoff acceptance notice to the gateway 20 (step S326). The gateway 20 then executes a cutoff process against the cellular exchanger 10 (step S327), which subsequently executes a cutoff process against the cellular interface CI of the communication terminal apparatus 4 (step S328).

Following the above steps, the other party's communication terminal apparatus 5 starts the call C immediately after sending out a notice of accepting cutoff of the call B (step S329). Subsequently, communication through the call C between the WLAN interface WI of the communication terminal apparatus 4 and the WLAN interface WI of the other party's communication terminal apparatus 5 is established.

Through the above process, setting of the basic call is carried out between the WLAN interface WI of the communication terminal apparatus 4 and that of the other party's communication terminal apparatus 5 through the SIP server 14 of the MLAN 8, as shown in Fig. 21. A decline in electric wave reception intensity at the WLAN interface WI leads to execution of a wall change. This call change results in establishment of a call from the cellular interface CI of the communication terminal apparatus 4 to the WLAN interface WI of the other party's communication terminal apparatus 5 via the cellular exchanger 10 of the cellular network 6, the gateway 20, and the SIP server 14 of the WLAN 8, as shown in Fig. 22. A decline in electric wave reception intensity at the cellular interface CI leads to execution of another call change, which is executed as shown in Fig. 21. These processes of call change and cutoff are executed while communication between the communication terminal apparatus 4 and the other party's communication terminal apparatus 5 is maintained.

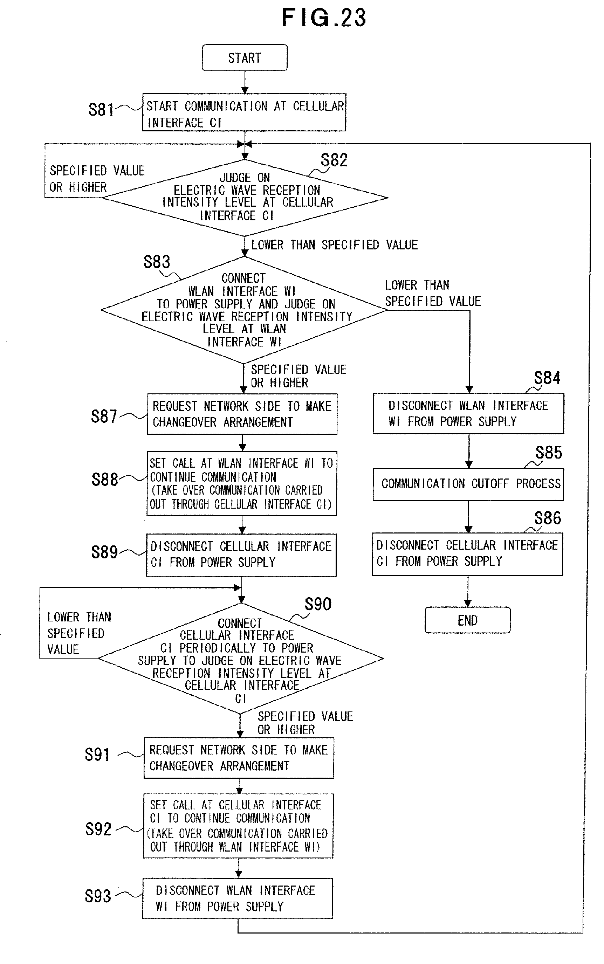

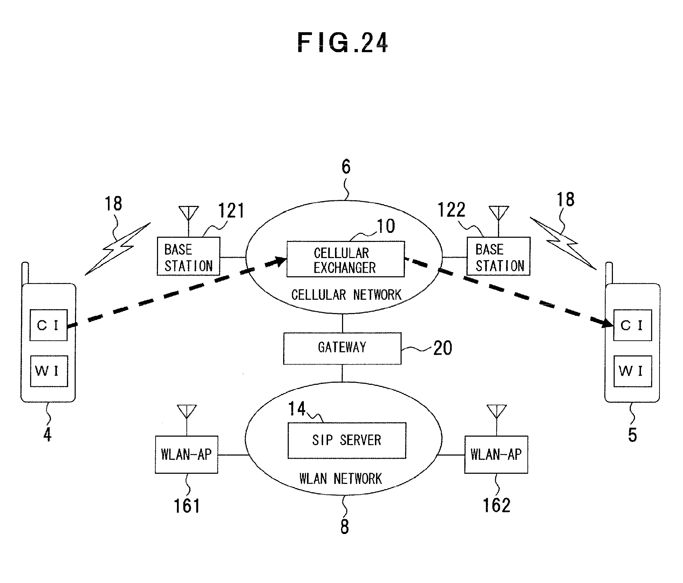

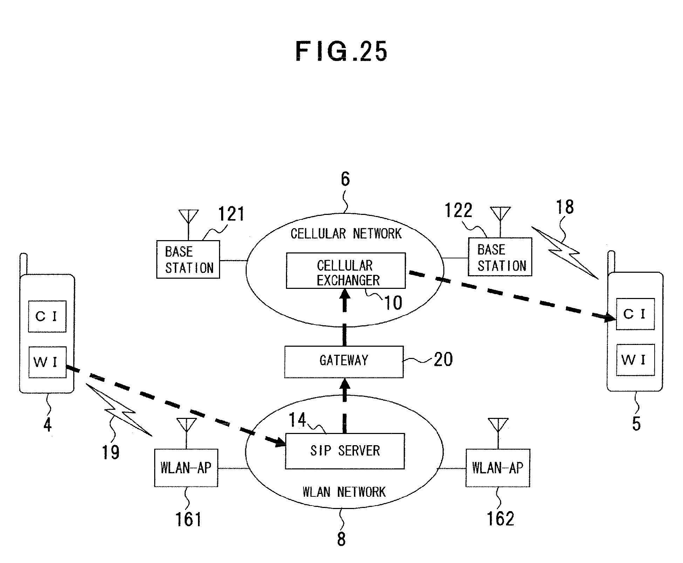

While the present embodiment is described through the description of the process that gives priority to the WLAN interface WI, a process giving priority to the cellular interface CI is also applicable according to the present embodiment, as shown in Figs. 23, 24 and 25. Fig. 23 is another flowchart of the process procedure according to the communication program of the communication terminal apparatus 4. Fig. 24 depicts communication between the communication terminal apparatuses carried out via the cellular exchanger only. Fig. 25 depicts communication between the communication terminal apparatuses carried out via the cellular exchanger, the gateway, and the SIP server.

According to the process procedure giving priority to the cellular interface CI, as shown in Fig. 23, the cellular interface CI is connected to the power supply to start operating at the beginning of communication (step S81). During the communication through the cellular interface CI, an electric wave reception intensity level at the cellular interface CI is measured, and a judgment is made on whether a resulting measurement is a specified value or higher, or lower than the specified value (step S82). When the measurement is the specified value or higher, the communication through the cellular interface CI is maintained. When the measurement is lower than the specified value, the WLAN interface WI is connected to the power supply, and an electric wave reception intensity level at the WLAN interface WI is measured, then a judgment is made on whether a resulting measurement is a specified value or higher, or lower than the specified value (step S83). If the measurement is lower than the specified value, communication through the WLAN interface WI is impossible. The WLAN interface WI is, therefore, disconnected from the power supply (step S84). When the communication is over, a communication cutoff process is executed (step S85) to cut off power supply to the cellular interface CI (step S86) and end the communication operation.

If the measurement of the electric wave reception intensity level at the WLAN interface WI is the specified value or higher at step S83, communication through the WLAN interface WI is possible. As a result, a request for connection changeover arrangement is sent to the network side (step S87), and connection (call) through the WLAN interface WI is set, which is followed by passing over of communication connection from the cellular interface CI to the WLAN interface WI (step S88) to continue the communication. After the above setting is completed, the cellular interface CI is disconnected from the power supply (step S89).

While communication is going on through the WLAN interface WI, the cellular interface CI is connected to the power supply and actuated periodically to measure an electric wave reception intensity level at the cellular interface CI and determine whether a resulting measurement is the specified value or higher, or lower than the specified value (step S90). When the measurement is lower than the specified value, the communication through the WLAN interface WI is maintained. When the measurement is the specified value or higher, a request for connection changeover arrangement is sent to the network side (step S91), and connection (call) at the cellular interface CI is set to continue the communication (passing over of a communication connection from the WLAN interface WI to the cellular interface CI) (step S92). After the above setting is completed, the WLAN interface WI is disconnected from the power supply (step S93).

Subsequently, the process according to the communication program of the communication terminal apparatus 4, the network, and the other party's communication terminal apparatus 5 is executed in the process sequence shown in Fig. 23 to set a call between the cellular interfaces CI. In this case, setting of the basic call is carried out between the cellular interface CI of the communication terminal apparatus 4 and that of the other party's communication terminal apparatus 5 through the cellular exchanger 10 of the cellular network 6, as shown in Fig. 24. A decline in electric wave reception intensity at the cellular interface CI leads to execution of a call change. This call change results in establishment of a call from the WLAN interface WI of the communication terminal apparatus 4 to the cellular interface CI of the other party's communication terminal apparatus 5 via the SIP server 14 of the WLAN 8, the gateway 20, and the cellular exchanger 10 of the cellular network 6, as shown in Fig. 25. A decline in electric wave reception intensity at the WLAN interface WI leads to execution of another call change, which is executed as shown in Fig. 24. These processes of call change and cutoff are executed while communication between the communication terminal apparatus 4 and the other party's communication terminal apparatus 5 is maintained.

### <Second Embodiment>

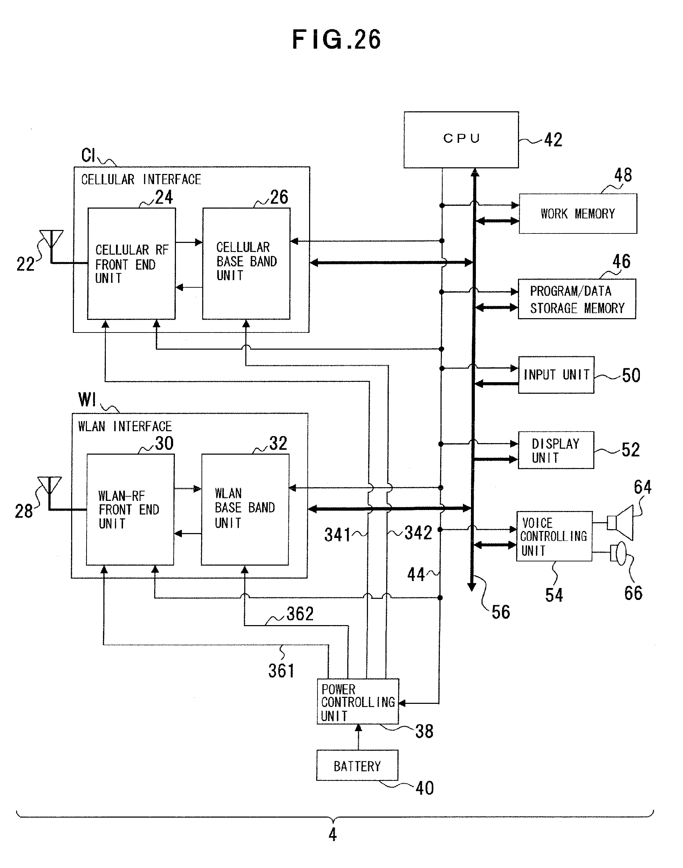

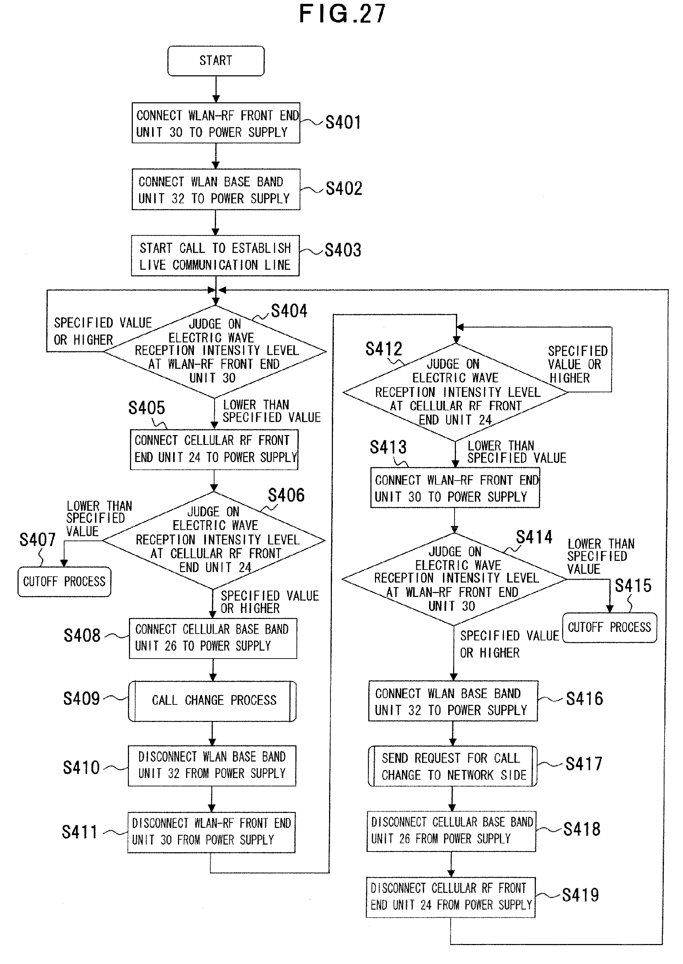

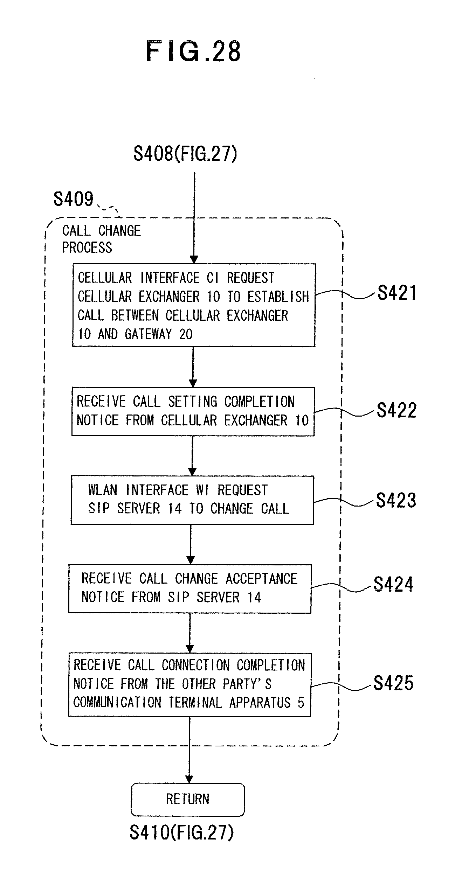

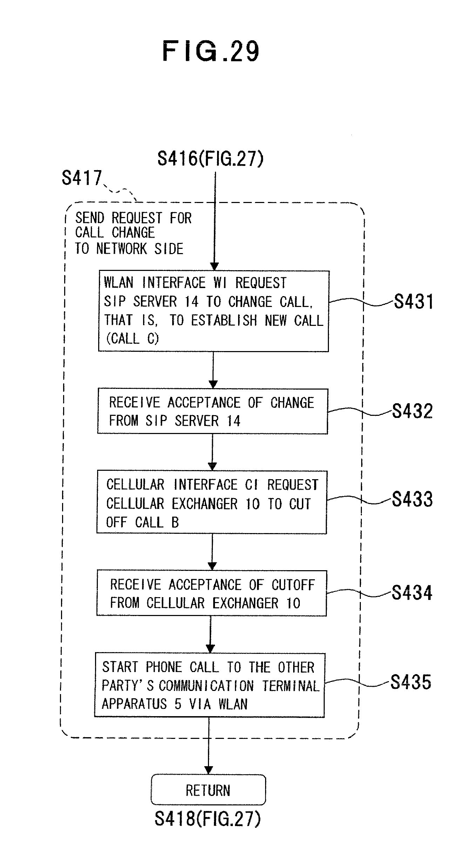

A second embodiment according to the present invention will now be described referring to Figs. 26, 27, 28 and 29. Fig. 26 depicts a structural example of a communication terminal apparatus 4 according to the second embodiment. Fig. 27 is a flowchart of a process procedure according to a communication program of the communication terminal apparatus 4 of the second embodiment. Fig. 28 is a flowchart of a subroutine on a call change. Fig. 29 is a flowchart of a subroutine on a process of a request for a call change sent to the network side. In Fig. 26, the same components as described in Fig. 4 are denoted by the same reference numerals to omit repeated descriptions.

According to the second embodiment, in the cellular interface CI of the communication terminal apparatus 4, the cellular RF front end unit 24 is connected to the power controlling unit 38 via a power feeder cable 341, and the cellular base band unit 26 is connected to the power controlling unit 38 via a power feeder cable 342, as shown in Fig. 26. The cellular RF front end unit 24 and the cellular base band unit 26 are, therefore, each supplied with power independently. Likewise, in the WLAN interface WI, the WLAN-RF front end unit 30 is connected to the power controlling unit 38 via a power feeder cable 361, and the WLAN base band unit 32 is connected to the power controlling unit 38 via a power feeder cable 362. The WLAN-RF front end unit 30 and the WLAN base band unit 32 are, therefore, each supplied with power independently.

According to the above structure, the cellular RF front end unit 24 and the WLAN-RF front end unit 30 are connected constantly to the power supply, and connection of the cellular base band unit 26 or the WLAN base band unit 32 to the power supply is changed according to a communication state, such as electric wave reception intensity.

The second embodiment, in the same manner as the first embodiment, is implemented by using the communication system 2 shown in Fig. 1, the communication method shown in Figs. 2 and 3, the cellular exchanger 10 shown in Fig. 7, the SIP server 14 shown in Fig. 9, and the gateway 20 shown in Fig. 11.

According to the second embodiment, the WLAN-RF front end unit 30 is connected to the power supply, and then the WLAN base band unit 32 is connected to the power supply at the start of communication at the WLAN interface WI *.* A process consisting of two steps, therefore, is executed at the start of communication. In this point, the same process is carried out at the cellular interface CI.

According to the process procedure according to the communication program of the present embodiment, as shown in Fig. 27, the WLAN-RF front end unit 30 is connected to the power supply (step S401), and the WLAN base band unit 32 is connected to the power supply (step S402) to start communication at the WLAN interface WI. This enables the WLAN interface WI to operate for communication, starting a call to establish a live communication line (step S403).

An electric wave reception intensity level at the WLAN-RF front end unit 30 is measured, and a judgment is made on whether a resulting measurement is a specified value or higher, or lower than the specified value (step S404). When the measurement is the specified value or higher, the communication through the WLAN interface WI is maintained. When the measurement is lower than the specified value, the cellular RF front end unit 24 is connected to the power supply (step S405).

Then, an electric wave reception intensity level at the cellular RF front end unit 24 is measured, and a judgment is made on whether a resulting measurement is the specified value or higher, or lower than the specified value (step S406). When the measurement is lower than the specified value, a connection cutoff process is executed (step S407). When the measurement is the specified value or higher, the cellular base band unit 26 is connected to the power supply (step S408) to operate the cellular interface CI.

For a connection changeover to the cellular interface CI, a call change process is executed (step S409) . As a result, the WLAN base band unit 32 is disconnected from the power supply (step S410), and the WLAN-RF front end unit 30 is disconnected from the power supply (step S411).

Subsequently, an electric wave reception intensity level at the cellular RF front end unit 24 is measured, and a judgment is made on whether a resulting measurement is the specified value or higher, or lower than the specified value (step S412). When the measurement is the specified value or higher, communication through the cellular interface CI is maintained. When the measurement is lower than the specified value, the WLAN-RF front end unit 30 is connected to the power supply (step S413).

An electric wave reception intensity level at the WLAN-RF front end unit 30 is then measured, and a check is made on whether a resulting measurement is the specified value or higher, or lower than the specified value (step S414). When the measurement is lower than the specified value, a connection cutoff process is executed (step S415). When the measurement is the specified value or higher, the WLAN base band unit 32 is connected to the power supply (step S416).

For a connection changeover to the WLAN interface WI, a request for a call change (detour setting) is sent to the network side (step S417). As a result, the cellular base band unit 26 is disconnected from the power supply (step S418), and the cellular RF front end unit 24 is disconnected from the power supply (step S419), after which the process procedure proceeds to step S404.

A subroutine on the call change process (step S409) will then be described referring to Fig. 28.

In the call change process (step 5409), the cellular interface CI requests the cellular exchanger 10 to establish a call between the cellular exchanger 10 and the gateway 20 (step S421). This is the process that is carried out by the communication terminal apparatus 4 to establish a call through the cellular interface CI when electric wave reception intensity at the WLAN interface WI declines in communication through the WLAN interface WI. In this process, the communication terminal apparatus 4 requests the cellular exchanger 10 to set a route (call) from the communication terminal apparatus 4 through the cellular exchanger 10 to the gateway 20. In this case, the cellular exchanger 10 executes the same process as a normal call setting process in such a way that the communication terminal apparatus 4 regards the gateway 20 as an equivalent to the other party's communication terminal apparatus 5, specifying the phone number of the gateway 20 and requesting the cellular exchanger 10 to provide connection to the gateway 20. The cellular exchanger 10 does not distinguish the call setting process responding to the request from a normal call setting process, and the communication terminal apparatus 4 does not have to issue any specific instruction to the gateway 20. Based on the request, the communication terminal apparatus 4 receives a call setting completion notice from the cellular exchanger 10 step S422).

The WLAN interface WI requests the SIP server 14 to change a call (step S423). In this case, a route (call) connecting the cellular exchanger 10 to the gateway 20 has been established, but a route connecting the gateway 20 to the WLAN interface WI of the other party's communication terminal apparatus 5 has not been established. Because of this, the WLAN interface WI sends a request to the SIP server 14 controlling the WLAN to set the route (call) connecting the gateway 20 to the WLAN interface WI of the other party's communication terminal apparatus 5. At this time, when the other party's communication terminal apparatus 5 has been engaging in a phone call using its WLAN interface WI, the on-going phone call (call) have to be changed to a phone call made through the route via the gateway 20. The request, therefore, must be "change request", or "setting request" for a call change.

Based on such a request, the WLAN interface WI receives a call change acceptance notice from the SIP server 14 (step S424). The WLAN interface WI then receives a call connection completion notice from the other party's communication terminal apparatus 5 (step S425), and the process procedure returns to step S410 (Fig. 27).

A subroutine on the call change request sent to the network side (step S417) will then be described referring to Fig. 29.

In this call change request (step S417), the WLAN interface WI requests the SIP server 14 to change a call, that is, to establish a new call (call C) (step S431). The WLAN interface WI receives a change acceptance notice from the SIP server 14 (step S432).

Subsequently, the cellular interface CI requests the cellular exchanger 10 to cut off the call B (step S43 3). Based on the request, the SIP server 14 receives a cutoff acceptance notice from the cellular exchanger 10 (step S434). As a result, the WLAN interface WI starts a phone call to the WLAN interface WI of the other party's communication terminal apparatus 5 via the WLAN 8 (step S435), and the process procedure returns to step S418 (Fig. 27).

### <Third Embodiment>

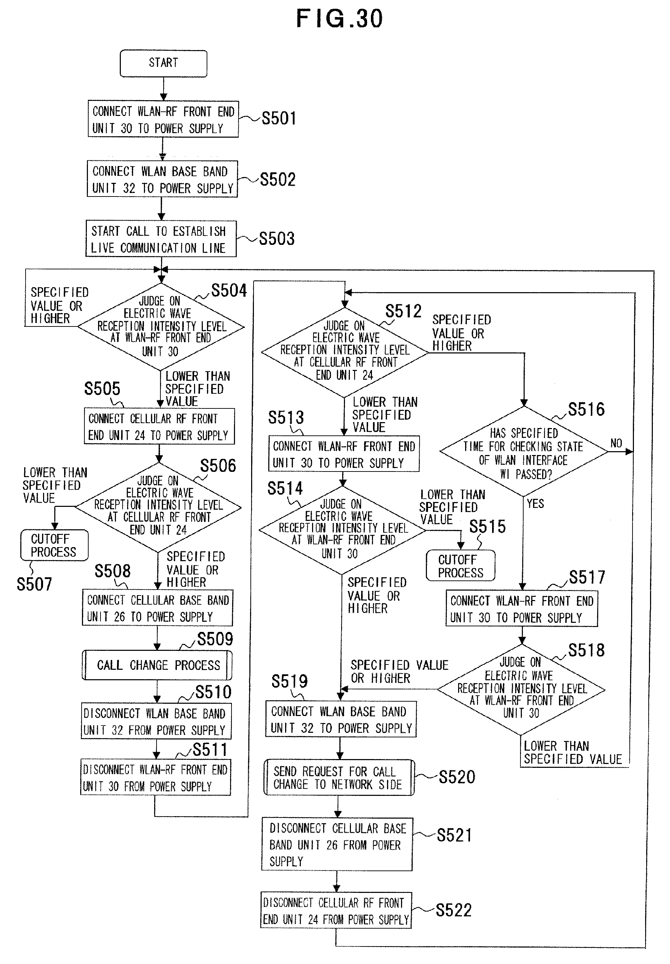

A third embodiment according to the present invention will now be described referring to Fig. 30. Fig. 30 is a flowchart of a process procedure of a communication terminal apparatus 4 according to the third embodiment.

The communication terminal apparatus 4 of the third embodiment has the same structure as the communication terminal apparatus 4 of the second embodiment (Fig. 26). The cellular RF front end unit 24 and the WLAN-RF front end unit 30 are connected constantly to the power supply, and connection of the cellular base band unit 26 or the WLAN base band unit 32 to the power supply is changed according to a communication state, such as electric wave reception intensity.

The third embodiment, in the same manner as the first embodiment, is implemented by using the communication system 2 shown in Fig. 1, the communication method shown in Figs. 2 and 3, the cellular exchanger 10 shown in Fig. 7, the SIP server 14 shown in Fig. 9, and the gateway 20 shown in Fig. 11.

According to the third embodiment, the WLAN-RF front end unit 30 is connected to the power supply (step S501), and then the WLAN base band unit 32 is connected to the power supply (step S502), which start a call to establish a live communication line (step S503).

An electric wave reception intensity level at the WLAN-RF front end unit 30 is measured, and a judgment is made on whether a resulting measurement is a specified value or higher, or lower than the specified value (step S504). When the measurement is the specified value or higher, the communication through the WLAN interface WI is maintained. When the measurement is lower than the specified value, the cellular RF front end unit 24 is connected to the power supply (step S505).

Then, an electric wave reception intensity level at the cellular RF front end unit 24 is measured, and a judgment is made on whether a resulting measurement is the specified value or higher, or lower than the specified value (step S506). When the measurement is lower than the specified value, a connection cutoff process is executed (step S507). When the measurement is the specified value or higher, the cellular base band unit 26 is connected to the power supply (step S508).

For a connection changeover to the cellular interface CI, the call change process (a subroutine shown in Fig. 28) is executed (step S509). As a result, the WLAN base band unit 32 is disconnected from the power supply (step S510), and the WLAN-RF front end unit 30 is disconnected from the power supply (step S511).

Subsequently, an electric wave reception intensity level at the cellular RF front end unit 24 is measured, and a judgment is made on whether a resulting measurement is the specified value or higher, or lower than the specified value (step S512). When the measurement is lower than the specified value, the WLAN-RF front end unit 30 is connected to the power supply (step S513). An electric wave reception intensity level at the WLAN-RF front end unit 30 is then measured, and a judgment is made on whether a resulting measurement is the specified value or higher, or lower than the specified value (step S514). When the measurement is lower than the specified value, a connection cutoff process is executed (step S515).

When the measurement is the specified value or higher at step S512, communication through the cellular interface CI is maintained, and a check is made on whether a specified time has passed, the specified time being defined as a unit time for checking the state of the WLAN interface WI (step S516). When the specified time has not passed, the current communication state is maintained until the specified time has passed (step S512). When the specified time has passed, the WLAN-RF front end unit 30 is connected to the power supply (step S517), which is followed by measurement of an electric wave reception intensity level at the WLAN-RF front end unit 30. When a resulting measurement is lower than the specified value, the procedure returns to step S512. When the measurement is the specified value or higher, the procedure proceeds to step S519.

The WLAN base band unit 32 is connected to the power supply (step S519) as a result of the electric wave reception intensity measurement of the specified value or higher at the WLAN-RF front end unit 30. For a connection changeover to the MLAN interface WI, a request for a call change (detour setting) is then sent to the network side (step S520). As a result, the cellular base band unit 26 is disconnected from the power supply (step S521), and the cellular RF front end unit 24 is disconnected from the power supply (step S522), after which the process procedure returns to step S504.

The above process procedure ensures priority to the WLAN interface WI, allows a connection change in response to an electric wave condition, and maintains on-going communication.

### <Other Embodiments>

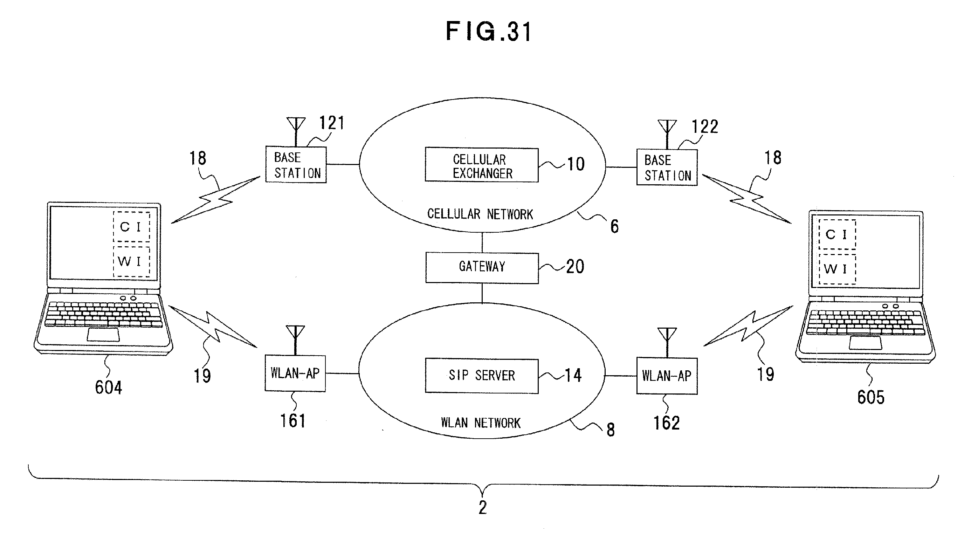

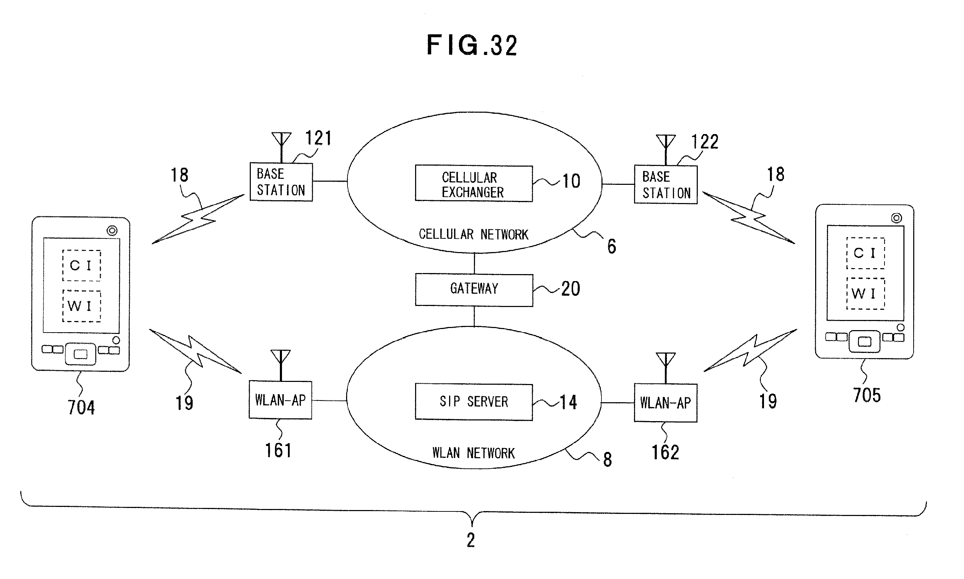

(1) While the communication terminal apparatus 4 is described as a typical communication apparatus in the above embodiments, the present invention can apply to any communication apparatus that has the cellular interface CI and the WLAN interface WI to be able to communicate with a plurality of communication networks. For example, as shown in Fig. 31, a communication system 2 including personal computers (PC) 604, 605 each equipped with the cellular interface CI and the WLAN interface WI offering a communication function may be constructed. A communication system 2 including portable information terminals (PDA: Personal Digital Assistant) 704, 705 having the same communication functions may also be constructed, as shown in Fig. 32.
(2) The above embodiments present the communication terminal apparatus 4, the PC 604, 605, and the PDA 704, 705, each having the cellular interface CI and the WLAN interface WI, as a typical communication apparatus. Besides these communication apparatuses, which are the so-called dual terminals each having a composite communication function, such a communication apparatus may be provided that has three of more interfaces including one serving other communication networks, such as a WiMAX system, and is capable of changing connection of each interface to a power supply.

While the present invention has been described with the preferred embodiments, the description is not intended to limit the present invention. Various modifications of the embodiments based on the subject matters and objects described in claims or disclosed in this specification will be apparent to those skilled in the techniques, and such modifications rightfully fall within the true scope of the present invention.

The present invention provides a communication apparatus particularly useful in such a way that the apparatus selects an interface from a plurality of interfaces to change power supply connection to the interfaces to offer a power saving advantage, and that the apparatus is capable of switching the interfaces to change a call in response to the deterioration of a communication state, such as a change in electric wave reception intensity, while maintaining on-going communication, thus maintaining the reliability of the communication.

## Claims

1. A communication apparatus connected wirelessly to a plurality of networks to execute communication through each network, the communication apparatus comprising:
a plurality of interfaces corresponding to the networks; and
a controlling unit that connects any one of the interfaces to a power supply to actuate the connected interface, and that connects an interface on rest to the power supply according to a communication state of an interface on communication to change communication connection from the interface on communication to the interface that has been on rest, wherein
the communication apparatus changes the interfaces while causing the interfaces to maintain communication with the other party's communication apparatus.

2. The communication apparatus of claim 1, the apparatus also including a communication controlling unit that causes the interface on communication to transmit information indicating communication connection changeover when communication connection is changed from the interface on communication to the interface that has been on rest.

3. The communication apparatus of claim 1 or 2, the apparatus further including:
the power supply to which the plurality of interfaces corresponding to the networks are connected; and
a connection changeover unit that changes connection between the interfaces and the power supply.

4. The communication apparatus of claim 1, 2 or 3, wherein the interface includes:
a signal processing unit that processes a signal to transmit or a signal to receive; and
a radio communication unit that transmits the signal in a form of a radio signal or receives a radio signal, and wherein
the radio communication unit is connected to the power supply to check an electric wave reception state, and the signal processing unit is connected to the power supply according to the electric wave reception state.

5. A server disposed in a network connected to a communication apparatus to communicate with the communication apparatus, the server comprising:
a reception unit that receives a request for a call change from the communication apparatus having a plurality of interfaces, the request being made upon changeover of the interfaces; and
an informing unit that informs another network of call change request information when the reception unit receives the call change request information.

6. A relay apparatus that is connected to a plurality of networks connected to a communication apparatus and that relays between each network, the relay apparatus having a controlling unit that receives call change request information from a network communicating with the communication apparatus to change a call, wherein
the relay apparatus changes the call to a network corresponding to an interface of the communication apparatus.

7. A communication system including a plurality of networks and a communication apparatus having a plurality of interfaces, the apparatus being connected to the networks wirelessly to carry out communication, wherein
the communication system has a changeover processing unit that receives information of changeover of communication with the networks from the communication apparatus, the communication changeover information being received upon changeover of the interfaces, and that changes a network communicating with an interface of the communication apparatus.

8. A communication method of wirelessly connecting to a plurality of networks to execute communication through each network, the method including the steps of:
connecting any one of interfaces to a power supply to actuate the connected interface;
monitoring a communication state of an interface on communication;
connecting an interface on rest to the power supply according to the communication state to actuate the connected interface; and
changing communication connection from the interface on communication to another interface, wherein
the method changes the interfaces while causing the interfaces to maintain communication with the other party's communication apparatus.

9. The communication method of claim 8, the method further including a step of causing the interface on communication to transmit communication changeover information when communication connection is changed from the interface on communication to the interface that has been on rest.

10. A communication program for a computer to execute to carry out communication, the program including the steps of:
executing a process of connecting any one of interfaces to a power supply;
monitoring a communication state of an interface on communication and determining on a deterioration of the communication state;
executing a process of connecting an interface on rest to the power supply according to the communication state; and
executing a process of changing communication connection from the interface on communication to another interface.

11. The communication program of claim 10, the program further including the steps of:
executing a process of changing communication connection from the interface on communication to the interface that has been on rest; and
executing a process of causing the interface on communication to transmit communication changeover information upon changing the communication connection.

12. A computer-readable recording medium storing a communication program for a computer to execute to carry out communication, the program including steps for the computer to execute, the steps including:
executing a process of connecting any one of interfaces to a power supply;
monitoring a communication state of an interface on communication and determining on a deterioration of the communication state;
executing a process of connecting an interface on rest to the power supply according to the communication state; and
executing a process of changing communication connection from the interface on communication to another interface.

13. The computer-readable recording medium of claim 12, the recording medium storing the communication program for the computer to execute, the program further including the steps of:
executing a process of changing communication connection from the interface on communication to the interface that has been on rest; and
executing a process of causing the interface on communication to transmit communication changeover information upon changing the communication connection.
